# EUROPEAN PATENT APPLICATION

(11) **EP 1 705 651 A1**
(43) Date of publication of application: **27.09.2006**
(21) Application number: 03782859.7
(22) Date of filing: 19.12.2003
(51) Int. Cl.: G11B 11/105

(54) **MAGNETO-OPTICAL RECORDING MEDIUM AND METHOD OF MANUFACTURING THE SAME, SUBSTRATE FOR MAGNETO-OPTICAL RECORDING MEDIUM, AND MOTHER DIE STAMPER AND METHOD OF MANUFACTURING THE SAME**

(71) Applicant: Fujitsu Ltd., Kawasaki-shi, Kanagawa 211-8588 (JP)
(72) Inventor: YAMAKAGE, Yuzuru c/o FUJITSU LIMITED, Kawasaki-shi, Kanagawa 211-8588 (JP); KAMIMURA, Takuya c/o FUJITSU LIMITED, Kawasaki-shi, Kanagawa 211-8588 (JP); TANAKA, Tsutomu c/o FUJITSU LIMITED, Kawasaki-shi, Kanagawa 211-8588 (JP)
(74) Representative: Sunderland, James Harry
(86) International application number: PCT/JP2003/016409
(87) International publication number: WO 2005/062301

(57) **Abstract**

A magneto-optic recording medium (X1) according to the invention includes a multilayer structure including a substrate (S1), a recording layer having perpendicular magnetic anisotropy so as to perform a recording function, and one or more functional layers (12) provided between the substrate and the recording layer. A surface of the substrate (S1) and of the one or more functional layers (12) facing the recording layer include a minute concave-convex surface (10b, 10c), having a surface roughness of 0.3 to 1.5 nm, and a concave-convex pitch of 1 to 20 nm.

## Description

### TECHNICAL FIELD

The present invention relates to a magneto-optic recording medium that includes a recording layer with perpendicular magnetic anisotropy and a method of manufacturing the same, and to a substrate for the magneto-optic recording medium, a mother stamper for manufacturing the substrate, and a method of manufacturing the mother stamper.

### BACKGROUND ART

Recently, much attention has been paid to magneto-optic recording media. A magneto-optic recording medium is a rewritable medium, based on various magnetic characteristics of magnetic materials, so as to perform two functions of thermomagnetic recording and reproducing based on a magneto-optic effect.

The magneto-optic recording medium includes a recording layer constituted of a perpendicular magnetic film made of a rare earth-transition metal amorphous alloy. The perpendicular magnetic film has a magnetic easy axis in a perpendicular direction with respect to the film surface. In the magneto-optic recording medium, a predetermined signal is recorded in a form of a variation in magnetizing direction, in such recording layer. In a recording process in the magneto-optic recording medium, a predetermined signal is recorded as a variation in magnetizing direction in the recording layer, by a combination of heating of a predetermined position in the recording layer by irradiation with a recording laser beam and application of a magnetic field to the predetermined position. In a reproducing process from the magneto-optic recording medium, a reproducing laser is locally emitted to the recording layer or a recording magnetic region including the recording layer, to thereby read out the recorded signal as a variation in magnetizing direction utilizing a variation in polarizing status that can be created when the emitted beam is reflected by the recording layer surface or the recording magnetic region surface. Such magneto-optic recording medium can be found in, for example, JP-A-H08-17080, International Publication WO98/02878, and JP-A-H10-149592.

In the recording and reproducing process, in which the medium is irradiated with a laser having a predetermined energy appropriate for the respective medium, it is known that the smaller the laser irradiation region, i.e. the spot diameter on the medium surface is, the higher recording resolution and reproducing resolution can be achieved. Improving the recording resolution and the reproducing resolution contributes to achieving higher recording density of the medium. The spot diameter can be reduced by shortening the wavelength of the emitted laser or increasing the numerical aperture NA of an objective lens (lens opposing the medium) for condensing the emitted laser.

However, a lens with a larger numerical aperture NA has a shorter focal length, and hence it is often more difficult to apply such lens to a conventional back illumination type magneto-optic recording medium. This is because, in the back illumination type magneto-optic recording medium, the condenser lens is required to have a relatively long focal length, because the laser is emitted to the recording layer or the recording magnetic region from the side of a transparent substrate, which has to have a certain thickness from the viewpoint of mechanical strength.

In the technical field of the magneto-optic recording medium, there is a great demand for replacing the back illumination system with a front illumination system, so as to enable utilizing a lens with a larger numerical aperture NA. This is because, in the front illumination type magneto-optic recording medium, the laser is emitted to the recording layer or the recording magnetic region from an opposite side to the substrate, and therefore the condenser lens does not have to have a focal length which is as long as that required in the back illumination type magneto-optic recording medium.

On the other hand, with the magneto-optic recording medium, it is known that the shorter a stable recording mark (magnetic domain) that can be formed in the recording layer is, the higher recording resolution, hence the higher recording density can be achieved. It is also known that a smaller and more stable magnetic domain can be more easily obtained in the recording layer (rare earth-transition metal amorphous alloy perpendicular magnetic film), when the surface where the recording layer is formed in stacks is uneven to an appropriate extent of roughness, and the pitch of the concave and convex portion is smaller.

The concave-convex shape of the surface for the layer formation can fix a magnetic wall present in the magnetic domain structure. This is generally called pinning. When the concave-convex shape of the surface for the layer formation is periodic, a uniform pinning effect takes place, such that a shorter period of the concave-convex shape leads to a finer pinning unit (magnetic cluster generated in the recording layer), and the greater the surface roughness of the surface for the layer formation is, the greater pinning force is applied to the magnetic wall. The smaller the pinning unit is and the greater the pinning force is, the smaller recording mark (magnetic domain) can be formed stably in the recording layer, and thus the higher recording resolution is achieved. Accordingly, in the magneto-optic recording medium, the surface for the layer formation of recording layer is often intentionally provided with the concave-convex shape, so as to micronize the magnetic domain structure of the recording layer constituted of the amorphous alloy perpendicular magnetic film.

For forming such concave-convex shape according to a known method, firstly a predetermined material film is formed right under the recording layer, as an underlying layer. Then on the surface of the material film, a material with a greater surface tension than the material film is deposited and grown. The deposited material grows in a shape of an island, because of the difference in surface tension from the surface of the material film. Thus, the concave-convex shape can be formed on the surface for the layer formation of the recording layer.

In the technical field of the front illumination type magneto-optic recording medium, the spot diameter of the recording laser small enough to form a recording mark with the mark length of 100 nm or less has already been achieved. However, it is still difficult to form the concave-convex shape that has a sufficiently small period and sufficiently great surface roughness to allow stably forming the recording mark with the mark length of 100 nm or less on the surface for the layer formation of the recording layer, by the foregoing conventional method of intentionally forming the concave-convex shape. Therefore, utilizing the conventional technique may lead to failure in sufficiently improving the recording resolution, thus resulting in failure in achieving a desired high recording density.

The present invention has been conceived under the foregoing situation, with an object to provide a magneto-optic recording medium appropriate for achieving higher recording density and a method of manufacturing such recording medium, as well as a substrate for the magneto-optic recording medium and a mother stamper for fabricating the substrate, and a method of manufacturing the mother stamper.

### DISCLOSURE OF THE INVENTION

A first aspect of the present invention provides a magneto-optic recording medium. The magneto-optic recording medium has a multilayer structure comprising a substrate, a recording layer having perpendicular magnetic anisotropy so as to perform a recording function, and a functional layer provided between the substrate and the recording layer. Either the substrate or the functional layer includes a surface faceing the recording layer. The surface includes a minute concave-convex surface with a roughness of 0.3 to 1.5 nm and a concave-convex pitch of 1 to 20 nm, in other words a relatively great surface roughness and a relatively small. The term of surface roughness herein means an arithmetic average height defined in JIS B0601 with respect to the surface in question. The surface roughness thus defined will be indicated with a parameter Ra. In the medium defined above, when a plurality of functional layers are present between the substrate and the recording layer, one of the plurality of functional layers is in contact with the recording layer, and no other functional layer is in contact with the recording layer. The minute concave-convex surface is included in at least one of the recording layer-side surface of the functional layer in contact with the recording layer (first functional layer), the recording layer-side surface of the functional layer not in contact with the recording layer (second functional layer), and the recording layer-side surface of the substrate. Also, the medium defined above is formed through sequentially depositing predetermined materials on the substrate.

When the recording layer-side surface of the first functional layer includes the minute concave-convex surface, a pinning force originating from the minute concave-convex shape of the minute concave-convex surface having both a great surface roughness and a small concave-convex pitch is applied to a magnetic wall formed in a magnetic domain structure presenting perpendicular magnetic anisotropy, in the recording layer stacked directly upon the first functional layer. Accordingly, a minute magnetic domain can be stably formed in such recording layer.

When the recording layer-side surface of the second functional layer includes the minute concave-convex surface, the minute concave-convex shape of the minute concave-convex surface on the second functional layer is reflected on the recording layer-side surface of the first functional layer, if the one layer (including the first functional layer) interposed between the second functional layer and the recording layer is made sufficiently thin, and thus the minute concave-convex surface including both the great surface roughness and the small concave-convex pitch is formed also on the surface of the first functional layer. The pinning force originating from the minute concave-convex shape of such minute concave-convex surface on the first functional layer is applied to the magnetic wall in the recording layer, by which a minute magnetic domain can be stably formed in the recording layer.

When the recording layer-side surface of the substrate includes the minute concave-convex surface, the minute concave-convex shape of the minute concave-convex surface on the substrate is reflected on the recording layer-side surface of the first functional layer, if the one layer (including the first functional layer) interposed between the substrate and the recording layer is made sufficiently thin, and thus the minute concave-convex surface including both the great surface roughness and the small concave-convex pitch is formed also on the surface of the first functional layer. The pinning force originating from the minute concave-convex shape of such minute concave-convex surface on the first functional layer is applied to the magnetic wall in the recording layer, by which a minute magnetic domain can be stably formed in the recording layer.

The magneto-optic recording medium thus constructed so as to stably form a minute magnetic domain in the recording layer has a high recording resolution, and is hence appropriate in achieving a higher recording density.

In the first aspect of the present invention, preferably, the multilayer structure may have a land-groove shape including a land portion and a groove portion, and the surface of the either the substrate or the functional layer includes the minute concave-convex surface at only one of either the land portion or the groove portion, where the surface means one facing the recording layer. Such structure is appropriate in utilizing only one of the land portion and the groove portion in the recording layer as an information recording region.

Preferably, the recording layer may be constituted of a magnetic material (rare earth-transition metal amorphous alloy) having a composition which causes a transition metal magnetization to be dominant, and the functional layer may be constituted of a magnetic material (rare earth-transition metal amorphous alloy) having a composition which causes a rare earth metal magnetization to be dominant for reducing the recording magnetic field intensity, and may include an auxiliary recording layer in contact with the recording layer. Alternatively, the recording layer may be constituted of a magnetic material (rare earth-transition metal amorphous alloy) having a composition which causes a rare earth metal magnetization to be dominant, and the functional layer may be constituted of a magnetic material (rare earth-transition metal amorphous alloy) having a composition which causes a rare earth metal magnetization to be dominant for reducing the recording magnetic field intensity, and may include an auxiliary recording layer in contact with the recording layer.

The multilayer structure according to the first aspect of the present invention may, preferably, further include a reproducing layer having perpendicular magnetic anisotropy for performing a reproducing function, and an intermediate layer interposed between the recording layer and the reproducing layer for varying the exchange coupling condition of the recording layer and the reproducing layer. Such structure enables utilizing the magneto-optic recording medium according to the present invention as a medium compatible with a domain wall displacement detection (DWDD) or a magnetic amplifying magneto-optical system (MAMMOS). The present invention offers a remarkably great practical benefit especially when applied to a magneto-optic recording medium based on the DWDD reproduction system or the MAMMOS reproduction system, which both provide high reproducing resolution.

A second aspect of the present invention provides another magneto-optic recording medium. The magneto-optic recording medium has a multilayer structure comprising a substrate, a recording layer having perpendicular magnetic anisotropy so as to perform a recording function, and a heat dissipation layer provided between the substrate and the recording layer. The heat dissipation layer includes a surface facing the recording layer. The surface includes a minute concave-convex surface with a roughness of 0.3 to 1.5 nm and a concave-convex pitch of 1 to 20 nm.

Such structure corresponds to the case where the surface of the first or the second functional layer includes the minute concave-convex surface, in the first aspect of the present invention. Therefore, the magneto-optic recording medium according to the second aspect of the present invention is also appropriate in achieving higher recording density, as the magneto-optic recording medium according to the first aspect.

In a preferred embodiment of the second aspect of the present invention, the multilayer structure (including the heat dissipation layer) may have a land-groove shape including a land portion and a groove portion, and the surface of the dissipation layer includes the minute concave-convex surface at only one of either the land portion or the groove portion, where the surface means one faceing the recording layer. Such structure is appropriate in utilizing only one of the land portion and the groove portion in the recording layer as an information recording region.

A third aspect of the present invention provides a substrate to be included in a magneto-optic recording medium. The substrate includes a surface constituted of a resin material. The surface includes a land surface and a groove surface and forming a land-groove shape. The land surface and/or the groove surface has a surface roughness Ra of 0.3 to 1. 5 nm and a concave-convex pitch of 1 to 20 nm. Employing the substrate thus configured enables manufacturing the foregoing magneto-optic recording medium including the substrate with the minute concave-convex surface.

A fourth aspect of the present invention provides a mother stamper for fabricating a substrate to be included in a magneto-optic recording medium. The stamper has a surface which includes a land surface and a groove surface and forms a land-groove shape. The land surface and/or the groove surface has a surface roughness Ra of 0.3 to 1.5 nm and a concave-convex pitch of 1 to 20 nm. Employing the stamper thus configured enables properly manufacturing the magneto-optic recording medium substrate according to the third aspect of the present invention.

A fifth aspect of the present invention provides a method of manufacturing a magneto-optic recording medium. The method comprises a step of forming on a base material a material film on a base material, the material film including a first material having a relatively low etching rate and a second material having a relatively high etching rate, a step of removing at least a part of the second material in the material film by an etching process, thereby forming a minute concave-convex surface on the material film, and a step of forming on the material film a recording layer having perpendicular magnetic anisotropy so as to perform a recording function. The method thus arranged enables properly manufacturing the magneto-optic recording medium according to the first aspect of the present invention, which includes the first or the second functional layer with the minute concave-convex surface provided on the surface thereof.

In a preferred embodiment of the fifth aspect of the present invention, the first material may contain an element selected out of the group consisting of Ag, Al, Pt, Ti, and Au, and the second material may contain an element selected out of the group consisting of C, Si, and W. Such structure allows properly forming the minute concave-convex surface having, for example, a surface roughness Ra of 0.3 to 1.5 nm and a concave-convex pitch of 1 to 20 nm.

A sixth aspect of the present invention provides a method of manufacturing a mother stamper for fabricating a substrate to be included in a magneto-optic recording medium. The method comprises a step of depositing, on a surface of the substrate having a first land-groove shape with a land surface and a groove surface on the surface thereof, a material having a greater surface energy than the surface of the substrate, while heating the material to a temperature higher than the diffusion temperature thereof, thus forming a first minute concave-convex shape, a step of growing a metal material on the surface of the substrate by an electroforming process, thereby forming a stamper having a second land-groove shape corresponding to the first land-groove and a second minute concave-convex shape corresponding to the first minute concave-convex shape, and a step of separating the stamper and the substrate. The method thus arranged allows properly forming the mother stamper that includes the second minute concave-convex shape having, for example, a surface roughness Ra of 0.3 to 1.5 nm and a concave-convex pitch of 1 to 20 nm, on the land surface and the groove surface thereof.

A seventh aspect of the present invention provides another method of manufacturing a mother stamper for fabricating a magneto-optic recording medium substrate. This is a method of manufacturing a mother stamper for fabricating a magneto-optic recording medium substrate, comprising a step of forming a material film including a first material having a relatively low etching rate and a second material having a relatively high etching rate, on a surface of the substrate having a first land-groove with a land surface and a groove surface provided on the surface thereof, a step of removing at least a part of the second material in the material film by an etching process, thereby forming a first minute concave-convex surface on the surface of the material film, a step of growing a metal material on the material film by an electroforming process, thereby forming a stamper having a second land-groove shape corresponding to the first land-groove and a second minute concave-convex shape corresponding to the first minute concave-convex shape, and a step of separating the stamper and the substrate. The method thus arranged allows properly forming the mother stamper that includes the second minute concave-convex shape having, for example, a surface roughness Ra of 0.3 to 1.5 nm and a concave-convex pitch of 1 to 20 nm, on the land surface and the groove surface thereof.

In a preferred embodiment of the seventh aspect of the present invention, the first material may contain an element selected out of the group consisting of Ag, Al, Pt, Ti, and Au, and the second material may contain an element selected out of the group consisting of C, Si, and W. Such structure allows properly forming the minute concave-convex surface having, for example, a surface roughness Ra of 0.3 to 1.5 nm and a concave-convex pitch of 1 to 20 nm.

An eighth aspect of the present invention provides another method of manufacturing a mother stamper for fabricating a magneto-optic recording medium substrate. The method comprises a step of forming a resist pattern with an opening on a substrate, a step of performing an etching process through the resist pattern, thereby forming on the substrate a first land-groove shape including a land surface and a groove surface, a step of depositing a material from the side of the resist pattern, thereby forming a material film including a first material having a relatively low etching rate and a second material having a relatively high etching rate, on the groove surface, a step of removing at least a part of the second material in the material film by an etching process, thereby forming a first minute concave-convex surface on the groove surface, a step of removing the resist pattern from the substrate, a step of growing a metal material on the surface of the substrate including the land surface and the groove surface by an electroforming process, thereby forming a stamper having a second land-groove shape corresponding to the first land-groove and a second minute concave-convex shape corresponding to the first minute concave-convex shape, and a step of separating the stamper and the substrate. The method thus arranged allows properly forming the mother stamper that includes the second minute concave-convex shape having, for example, a surface roughness Ra of 0.3 to 1.5 nm and a concave-convex pitch of 1 to 20 nm, on the land surface.

In a preferred embodiment of the eighth embodiment of the present invention, the method may further include a step of growing a metal material by an electroforming process on a surface of the stamper on the side of the second land-groove shape, thereby forming a child stamper having a third land-groove shape corresponding to the second land-groove shape, and a third minute concave-convex shape corresponding to the second minute concave-convex shape, and a step of separating the child stamper and the stamper. The method thus arranged allows properly forming the mother stamper that includes the second minute concave-convex shape having, for example, a surface roughness Ra of 0.3 to 1.5 nm and a concave-convex pitch of 1 to 20 nm, on the groove surface.

Preferably, the first material may contain an element selected out of the group consisting of Ag, Al, Pt, Ti, and Au, and the second material may contain an element selected out of the group consisting of C, Si, and W. Such structure allows properly forming the minute concave-convex shape having, for example, a surface roughness Ra of 0.3 to 1.5 nm and a concave-convex pitch of 1 to 20 nm.

### BRIEF DESCRIPTION OF THE DRAWINGS

Fig. 1 is a cross-sectional view showing a part of a magneto-optic recording medium according to a first embodiment of the present invention;
Fig. 2 is a cross-sectional view showing a variation of a recording magnetic region in the magneto-optic recording medium according to the present invention;
Fig. 3 is a cross-sectional view showing another variation of the recording magnetic region in themagneto-optic recording medium according to the present invention;
Figs. 4A to 4D show a part of steps in a method of manufacturing the magneto-optic recording medium shown in Fig. 1;
Figs. 5A to 5D show the steps subsequent to Fig. 4D;
Figs. 6A and 6B show the steps subsequent to Fig. 5D;
Figs. 7A to 7D show a part of steps in another method of manufacturing the magneto-optic recording medium shown in Fig. 1;
Fig. 8 is a cross-sectional view showing a part of a magneto-optic recording medium according to a second embodiment of the present invention;
Figs. 9A to 9D show a part of steps in a method of manufacturing the magneto-optic recording medium shown in Fig. 8;
Figs. 10A to 10D show the steps subsequent to Fig. 9D;
Figs. 11A to 11D show the steps subsequent to Fig. 10D;
Fig. 12 is a cross-sectional view showing a part of a magneto-optic recording medium according to a third embodiment of the present invention;
Figs. 13A to 13D show a part of steps in a method of manufacturing the magneto-optic recording medium shown in Fig. 12;
Figs. 14A and 14B show the steps subsequent to Fig. 13D;
Fig. 15 is a cross-sectional view showing a part of a magneto-optic recording medium according to a fourth embodiment of the present invention;
Figs. 16A to 16D show a part of steps in a method of manufacturing the magneto-optic recording medium shown in Fig. 15;
Figs. 17A to 17C show the steps subsequent to Fig. 16D;
Fig. 18 is a table showing a layer composition of the magneto-optic recording medium according to working examples 1 to 7;
Fig. 19 is a table showing a layer composition of the magneto-optic recording medium according to the working example 8;
Fig. 20 is a table showing a layer composition of the magneto-optic recording medium according to comparative examples 1 to 3;
Fig. 21 is a table showing a layer composition of the magneto-optic recording medium according to the comparative example 4;
Fig. 22 is a graph showing a bit error measurement result with respect to the magneto-optic recording medium according to the working examples 1 to 5 and the comparative examples 1 to 4; and
Fig. 23 is a table showing values of concave-convex pitch and surface roughness Ra, with respect to samples P1 to P12.

### BEST MODE FOR CARRYING OUT THE INVENTION

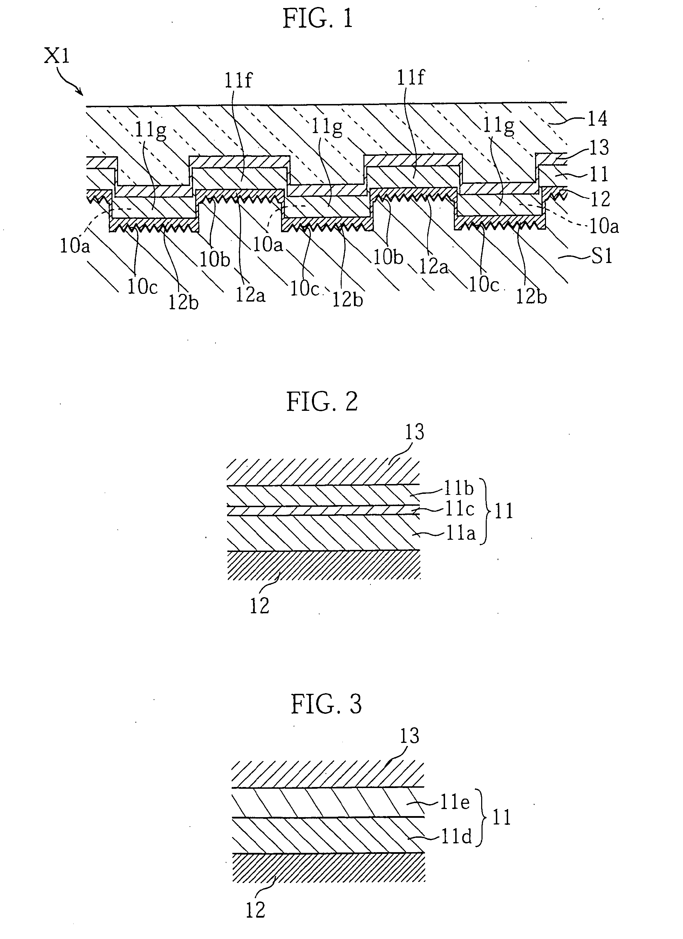

Fig. 1 is a cross-sectional view showing a part of a magneto-optic recording medium according to a first embodiment of the present invention. The magneto-optic recording medium X1 includes a substrate S1, a recording magnetic region 11, a heat dissipation layer 12, a dielectric layer 13, and-a protecting film 14, thus to be constituted as a front illumination type magneto-optic disk. Also, the magneto-optic recording medium X1 includes the multilayer structure shown in Fig. 1 on one or both sides of the substrate S1.

The substrate S1 includes a helical or concentric pregroove 10a thus presenting a land-groove shape, with a relatively projecting land surface 10b and a relatively retreated groove surface 10c. The land surface 10b and the groove surface 10c are a minute concave-convex surface with a minute concave-convex shape, having a surface roughness Ra of 0.3 to 1.5 nm and a concave-convex pitch of 1 to 20 nm. Such substrate S1 is constituted of a material having sufficient UV ray transmittance. Materials applicable to such substrate include a glass, a polycarbonate (PC) resin, a polymethylmethacrylate (PMMA) resin, an epoxy resin, and a polyolefin resin.

The recording magnetic region 11 has a magnetic structure that includes one or a plurality of magnetic films capable of performing two functions of thermomagnetic recording and reproduction based on a magneto-optic effect. For example, the recording magnetic region 11 may be constituted of a single recording layer having both of the recording function and the reproducing function. Alternatively, the recording magnetic region 11 may have a dual-layer structure including a recording layer having relatively large coercivity for performing the recording function, and a reproducing layer that makes a relatively large Kerr rotational angle in a reproducing laser, for performing the reproducing function. Otherwise, the recording magnetic region 11 may have at least three layers as shown in Fig. 2, including a recording layer 11a and a reproducing layer 11b for performing the reproduction based on a MSR system, a MAMMOS system or a DWDD system, and an intermediate layer 11c interposed therebetween. Still otherwise, the recording magnetic region 11 may include a recording layer 11d for performing the recording and reproducing function, and an auxiliary recording layer 11e as shown in Fig. 3. The auxiliary recording layer 11e is a perpendicular magnetic film, which serves to reduce a minimum external magnetic field intensity required for the recording process. The auxiliary recording layer 11e, which is a perpendicular magnetic film, enhances the perpendicular directivity of the magnetization in the recording layer, thus to serve to reduce the external magnetic field intensity for the recording process.

Each layer in the respective structures applicable to the recording magnetic region 11 is a perpendicular magnetic film having perpendicular magnetic anisotropy and perpendicularly magnetized, constituted of an amorphous alloy of a rare earth element and a transition metal. The perpendicular direction means a direction perpendicular with respect to the film surface of the magnetic film constituting the respective layers. The rare earth elements that may be employed include Tb, Gd, Dy, Nd, and Pr. Examples of the transition metal include Fe and Co.

More specifically, the recording layer may be constituted of, for example, TbFeCo, DyFeCo, or TbDyFeCo of a predetermined composition. When the reproducing layer is to be provided, the reproducing layer may be constituted of, for example, GdFeCo, GdDyFeCo, GdTbDyFeCo, NdDyFeCo, NdGdFeCo, or PrDyFeCo of a predetermined composition. When the intermediate layer is to be provided, the intermediate layer may be constituted of, for example, GdFe, TbFe, GdFeCo, GdDyFeCo, GdTbDyFeCo, NdDyFeCo, NdGdFeCo, or PrDyFeCo of a predetermined composition. The thickness of each layer is determined according to the magnetic structure required from the recording magnetic region 11.

When employing the dual-layer structure shown in Fig. 3 including the recording layer 11d and the auxiliary recording layer 11e as the recording magnetic region 11, it is preferable that the recording layer 11d has a composition which causes a transition metal magnetization to be dominant, and the auxiliary recording layer 11e has a composition which causes a rare earth metal magnetization to be dominant. Alternatively, it is preferable that the recording layer 11d has the composition which causes a rare earth metal magnetization to be dominant and the auxiliary recording layer 11e has the composition which causes a transition metal magnetization to be dominant.

The recording magnetic region 11 has a land-groove shape reflecting the land-groove shape of the substrate S1, and includes a land portion 11f and a groove portion 11g. The land portion 11f and the groove portion 11g constitute a data track in the recording medium.

The heat dissipation layer 12 serves to efficiently transmit heat generated by laser irradiation in the recording magnetic region 11 to the substrate S1, and is constituted of a highly heat-conductive material including Ag, an Ag alloy such as AgPdCuSi and AgPdCu, an Al alloy such as AlTi and AlCr, Au, and Pt. The heat dissipation layer 12 has a thickness of 10 to 40 nm for example. Also, the heat dissipation layer 12 has a land-groove shape reflecting the land-groove shape of the substrate S1, and includes a land portion 12a and a groove portion 12b.

The dielectric layer 13 serves to increase the apparent Kerr rotational angle in the reproducing laser, and is constituted of, for example, SiN, SiO₂, ZnS-SiO₂, AlN, or Al₂O₃. The dielectric layer 13 has a thickness of 20 to 90 nm, for example.

The protecting film 14 is constituted of a resin having sufficient transmittance with respect to the recording laser and the reproducing laser emitted onto the magneto-optic recording medium X1, in a thickness of 10 to 40 µm, for example. The resins applicable to the protecting film 14 include a UV-curable transparent resin.

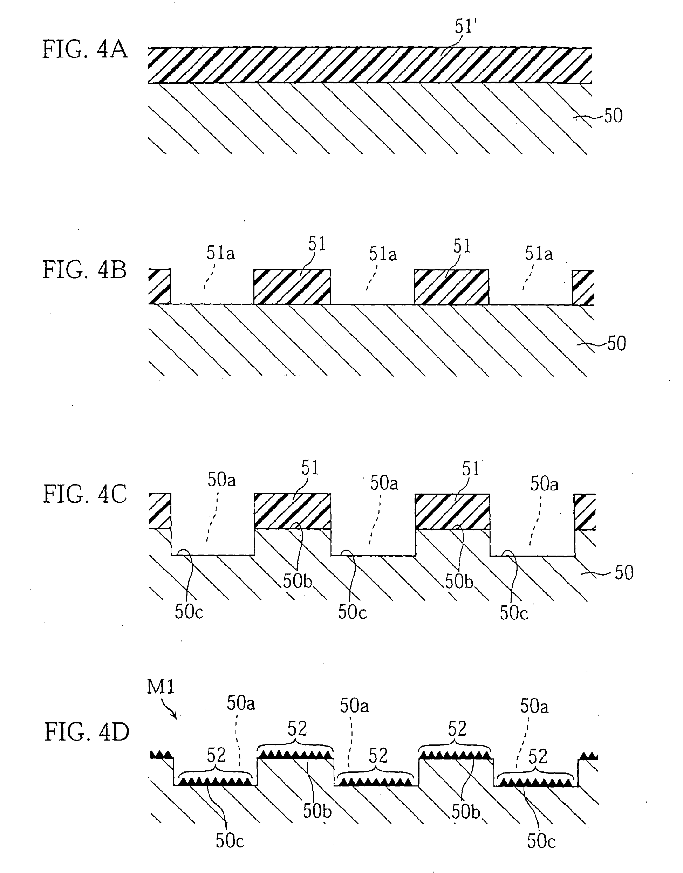

Figs. 4A to 6B show a method of manufacturing the magneto-optic recording medium X1. In this method, firstly a resist layer 51' is formed on a substrate 50, as shown in Fig. 4A. The substrate 50 may be a quartz substrate or a silicon wafer for producing a master disk.

Then exposure and development of the resist layer 51' is performed, thus to form a resist pattern 51 with an opening 51a as shown in Fig. 4B. The opening 51a has a pattern shape corresponding to the pregroove 10a to be formed on the substrate S1.

Proceeding to Fig. 4C, an etching process is performed on the substrate 50 with the resist pattern 51 serving as the mask, thus to form a recessed portion 50a on the substrate 50. At this stage, the substrate 50 obtains a land-groove shape including a land surface 50b and a groove surface 50c on the surface thereof. As for the etching process, for example a reactive ion etching (RIE) may be adopted. After forming the recessed portion 50a, the resist pattern 51 is removed from the substrate 50.

Then as shown in Fig. 4D, a minute concave-convex shape 52 is formed on the land surface 50b and the groove surface 50c. The minute concave-convex shape 52 has a concave-convex pitch of 1 to 20 nm, and a surface roughness Ra of 0.3 to 1.5 nm. When forming the minute concave-convex shape 52, specifically, a material having a greater surface energy than the surface of the substrate 50 is deposited thereon, while heating up the substrate 50. For the deposition, a sputtering or vapor deposition process may be employed, and the heating is performed at a higher temperature (for example 200 degrees centigrade) than the diffusion temperature of the deposition material. Also, a difference in surface tension between the substrate surface and the deposition material is set to be 1000 mN/m or greater, for example. The deposition material may be an elemental metal selected out of the group consisting of Pt, Au, Pd, Ru, Co, or an alloy containing suchmetal, provided that the metal or the alloy has a greater surface tension than the substrate surface. Through such steps, a master plate M1 for fabricating the substrate S1, having the recessed portion 50a corresponding to the pregroove 10a of the substrate S1 and the minute concave-convex shape 52 on the land surface 50b and the groove surface 50c can be obtained.

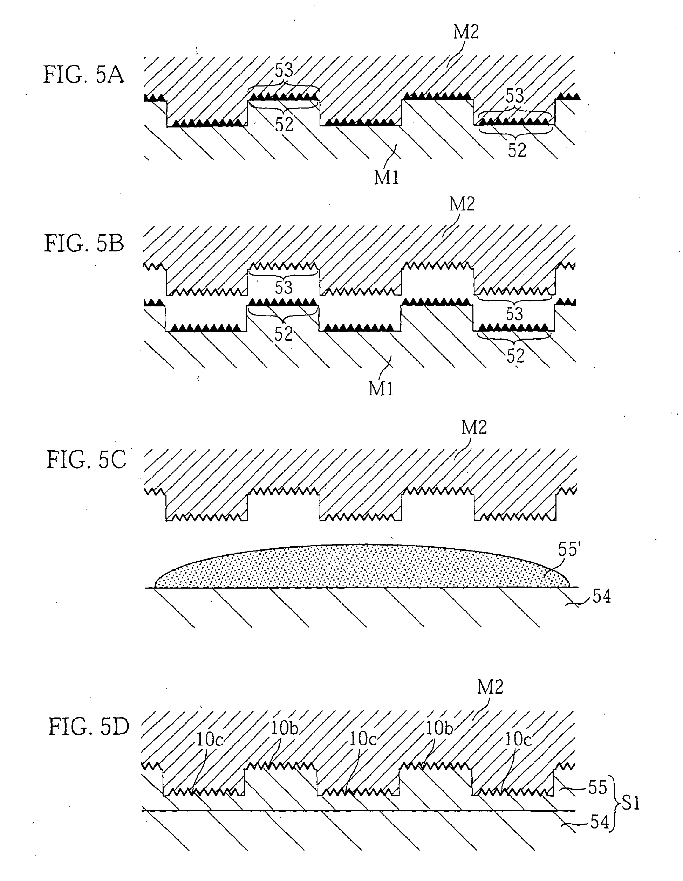

The next step in manufacturing the magneto-optic recording medium X1 is, as shown in Fig. 5A, forming a stamper M2 utilizing the master plate M1 as the template, by en electroforming process. Specifically, for example a sputtering process is first performed to form a conductive thin film on the master plate M1. To form the conductive thin film, nickel may be employed. Then based on the principle of electric plating, a predetermined conductive material is grown on the conductive thin film to a predetermined thickness, through the conductive thin film serving as the conductive layer. For example, nickel may be employed as the predetermined conductive material. Through such steps, the stamper M2, which serves as the mother stamper for fabricating the substrate S1, can be obtained. To the stamper M2, the land-groove shape and the minute concave-convex shape 52 of the master plate M1 are transferred, such that a land-groove shape and a minute concave-convex shape 53 are formed thereon. After forming the stamper M2, the stamper M2 and the master plate M1 are separated, as shown in Fig. 5B.

After performing a press process to form the stamper M2 into a disk shape of a predetermined outer diameter if necessary, the substrate S1 is fabricated utilizing the stamper M2, as shown in Figs. 5C and 5D.

Specifically, a base material 54 and the stamper M2 are adhered to each other via a UV-curable resin material 55'. The base material 54 has sufficient UV-ray transmittance, and may be constituted of a glass, a polycarbonate (PC) resin, a polymethylmethacrylate (PMMA) resin, an epoxy resin, and a polyolefin resin. The surface of the base material 54 may be subjected to a pretreatment, where necessary, to achieve excellent adhesion with the resin material 55'.

After the adhesion, the resin material 55' is irradiated with a UV-ray from the side of the base material 54 for hardening, thus to constitute a resin layer 55. As a result, the land-groove shape and the minute concave-convex shape 53 of the stamper M2 are transferred to the resin layer 55, to thereby form a land-groove shape including on the surface thereof the land surface 10b and the groove surface 10c both with the minute concave-convex shape. Through such steps, the foregoing substrate S1 is obtained. For manufacturing the substrate S1, an injection molding process may be employed with the stamper M2 as the template, instead of the foregoing method.

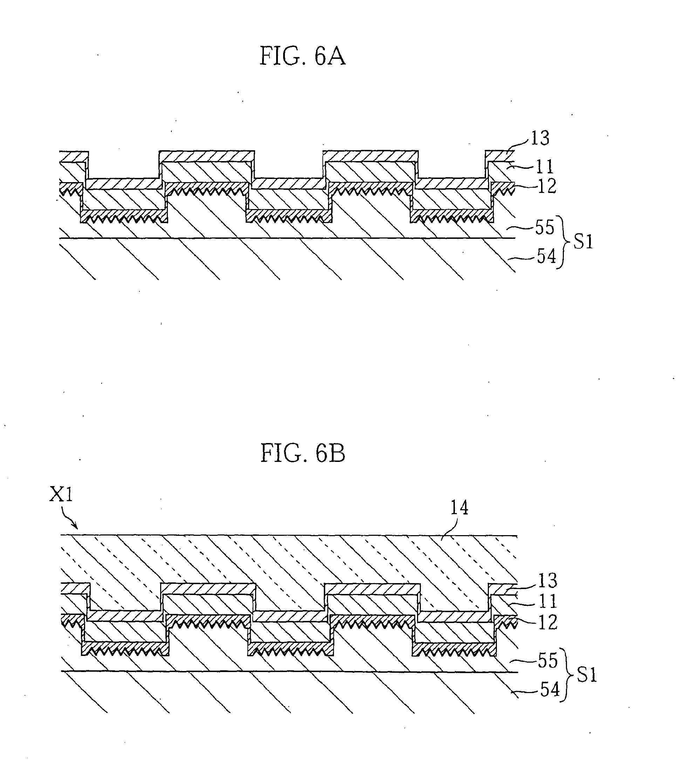

For manufacturing the magneto-optic recording medium X1, after separating the substrate S1 and the stamper M2, the heat dissipation layer 12, the recording magnetic region 11, and the dielectric layer 13 are sequentially formed on the substrate S1, as shown in Fig. 6A. These layers may be formed by depositing predetermined materials by a sputtering process.

Then as shown in Fig. 6B, the protecting film 14 is formed on the dielectric layer 13. To form the protecting film 14, firstly a liquid resin compound is deposited on the dielectric layer 13. For the deposition, a spin-coating process may be employed. Then the deposited resin compound is hardened.

Throughout the foregoing steps, the magneto-optic recording medium X1 can be manufactured. When providing the multilayer structure from the resin layer 55 to the protecting film 14 on both sides of the base material 54, the series of steps described referring to Figs. 5C to 6B are performed again on the other side of the base material 54.

In the magneto-optic recording medium X1, the substrate S1 includes the land surface 10b and the groove surface 10c respectively having the minute concave-convex shape. Theland surface 10b and the groove surface 10c have a surface roughness Ra of 0.3 to 1.5 nm, and a concave-convex pitch of 1 to 20 nm. The minute concave-convex shape on the land surface 10b and the groove surface 10c is reflected on the recording layer-side surface of the heat dissipation layer 12, which is sufficiently thin, so that a minute concave-convex shape (not shown) having both a great surface roughness and a small concave-convex pitch is formed also on the surface of the land portion 12a and the groove portion 12b of the heat dissipation layer 12. The minute concave-convex shape on the surface of the heat dissipation layer 12 has a surface roughness Ra of 0.3 to 1.5 nm, and a concave-convex pitch of 1 to 20 nm, for example. The pinning force originating from such minute concave-convex shape of the heat dissipation layer 12 is applied to the magnetic wall in the recording layer included in the recording magnetic region 11, at the land portion 11f and the groove portion 11g of the recording magnetic region 11, so that a minute magnetic domain can be stably formed in the recording layer. The magneto-optic recording medium X1 thus constructed has a high recording resolution, and is hence appropriate in achieving a higher recording density.

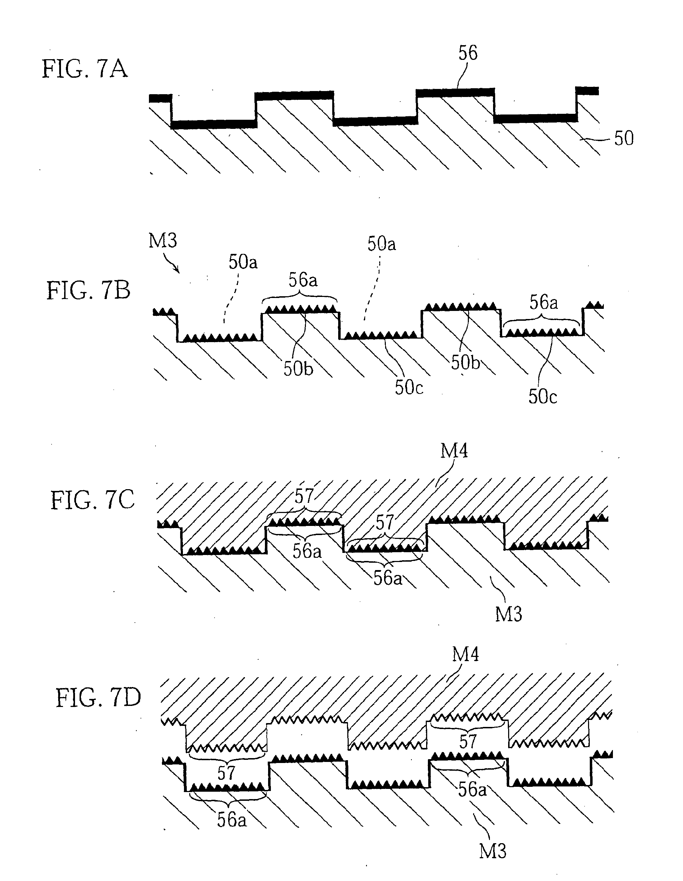

Figs. 7A to 7D show some steps in another method of manufacturing the magneto-optic recording medium X1. According to this method, a mixed layer 56 is first formed as shown in Fig. 7A, on the substrate 50 from which the resist pattern 51 has been removed, after completing the steps up to the state shown in Fig. 4C. The mixed layer 56 includes a first material as a mother material, which provides a relatively low etching rate in a subsequent etching process with a predetermined etching gas, and a second material of a relatively high etching rate in the same etching process, as an additive. The first material may contain an element selected out of the group consisting of Ag, Al, Pt, Ti, and Au. The second material may contain an element selected out of the group consisting of C, Si, and W. To form the mixed layer 56, a cosputtering process may be performed to deposit the first material and the second material on the substrate 50. The mixed layer 56 has a thickness of, for example, 1 to 5 nm.

Proceeding to Fig. 7B, a dry etching process is performed on the mixed layer 56 to form a minute concave-convex shape 56a. The minute concave-convex shape 56a has a roughness Ra of 0.3 to 1.5 nm and a concave-convex pitch of 1 to 20 nm. In this etching process, an etching gas having a higher etching rate with respect to the second material, than to the first material is employed. It is preferable that the etching rate with respect to the second material is ten times or more as high as the etching rate with respect to the first material. For example, when Ag is employed as the first material and C is employed as the second material, O₂ may be suitably employed as the etching gas. Otherwise, when Ag is employed as the first material and Si is employed as the second material, CF₄ may be suitably employed as the etching gas.

The foregoing steps lead to completion of a master plate M3 for fabricating the substrate S1 that includes the recessed portion 50a corresponding to the pregroove 10a of the substrate S1, as well as the minute concave-convex shape 56a on the land surface 50b and the groove surface 50c. In such manufacturing method of the master plate, the substrate 50 does not have to be intentionally heated up to 200 degree centigrade or higher, when forming the minute concave-convex shape 56a. Accordingly to the foregoing method, therefore, the master plate M3 can be properly manufactured even when the substrate 50 is constituted of a material prone to be deformed at 200 degree centigrade.

For manufacturing the magneto-optic recording medium X1, a stamper M4 is then formed by an electroforming process as shown in Fig. 7C, utilizing the master plate M3 as the template. Specific process is similar to the foregoing description given with reference to Fig. 5A on the formation of the stamper M2. To the stamper M4, the land-groove shape and the minute concave-convex shape 56a of the master plate M3 are transferred, so that the land-groove shape and a minute concave-convex shape 57 are formed thereon. After forming the stamper M4, the stamper M4 and the master plate M3 are separated, as shown in Fig. 7D.

Then the same process as the foregoing description given referring to Figs. 5C and 5D is performed, except for utilizing the stamper M4 as the mother stamper, in place of the stamper M2, or an injection molding process is performed with the stamper M4, to thereby form the substrate S1. Thereafter, as shown in Figs. 6A and 6B, the heat dissipation layer 12, the recording magnetic region 11, the dielectric layer 13, and the protecting film 14 are sequentially formed on the substrate S1.

Through the foregoing steps, the magneto-optic recording medium X1 can be manufactured.

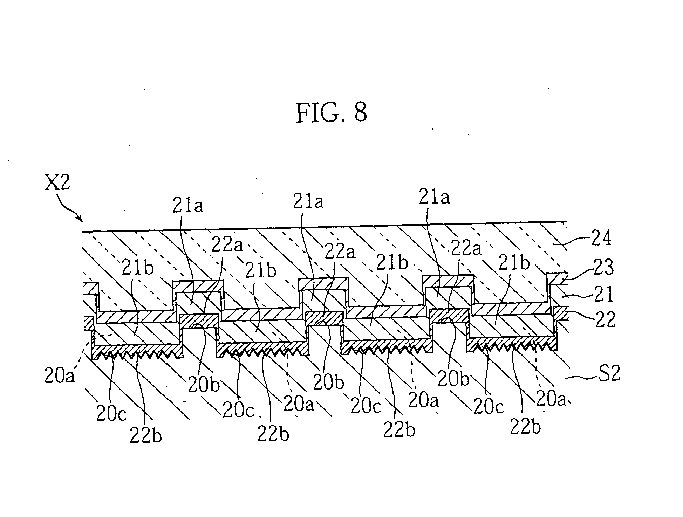

Fig. 8 is a cross-sectional view showing a part of a magneto-optic recording medium X2 according to a second embodiment of the present invention. The magneto-optic recording medium X2 includes a substrate S2, a recording magnetic region 21, a heat dissipation layer 22, a dielectric layer 23, and a protecting film 24, thus to be constituted as a front illumination type magneto-optic disk. Also, the magneto-optic recording medium X2 includes the multilayer structure shown in Fig. 8 on one or both sides of the substrate S2.

The substrate S2 includes a helical or concentric pregroove 20a thus presenting a land-groove shape, with a land surface 20b and a groove surface 20c. The land surface 20b and groove surface 20c are a minute concave-convex surface with a minute concave-convex shape, having a surface roughness Ra of 0.3 to 1.5 nm and a concave-convex pitch of 1 to 20 nm. To constitute the substrate S2, those materials cited above for the substrate S1 may be employed.

The recording magnetic region 21 has a magnetic structure that includes one or a plurality of magnetic films capable of performing two functions of thermomagnetic recording and reproduction based on a magneto-optic effect. For example, the recording magnetic region 21 may be constituted of a single recording layer having both of the recording function and the reproducing function. Alternatively, the recording magnetic region 21 may have a multilayer structure (including the recording layer) including a plurality of magnetic films similar to those included in the recording magnetic region 11. To constitute the recording magnetic region 21, those materials cited above for the recording magnetic region 11 may be employed. Also, the recording magnetic region 21 has a land-groove shape reflecting the land-groove shape of the substrate S2, and includes a land portion 21a and a groove portion 21b. The groove portion 21b constitutes a data track in the recording medium of the present invention.

The heat dissipation layer 22 serves to efficiently transmit heat generated by laser irradiation in the recording magnetic region 21 to the substrate S1, and has a thickness of 10 to 40 nm. Also, the heat dissipation layer 22 has a land-groove shape reflecting the land-groove shape of the substrate S2, and includes a land portion 22a and a groove portion 22b. To constitute the heat dissipation layer 22, those materials cited above for the heat dissipation layer 11 may be employed.

The dielectric layer 23 and the protecting film 24 are similarly constituted to the dielectric layer 13 and the protecting film 14 described above.

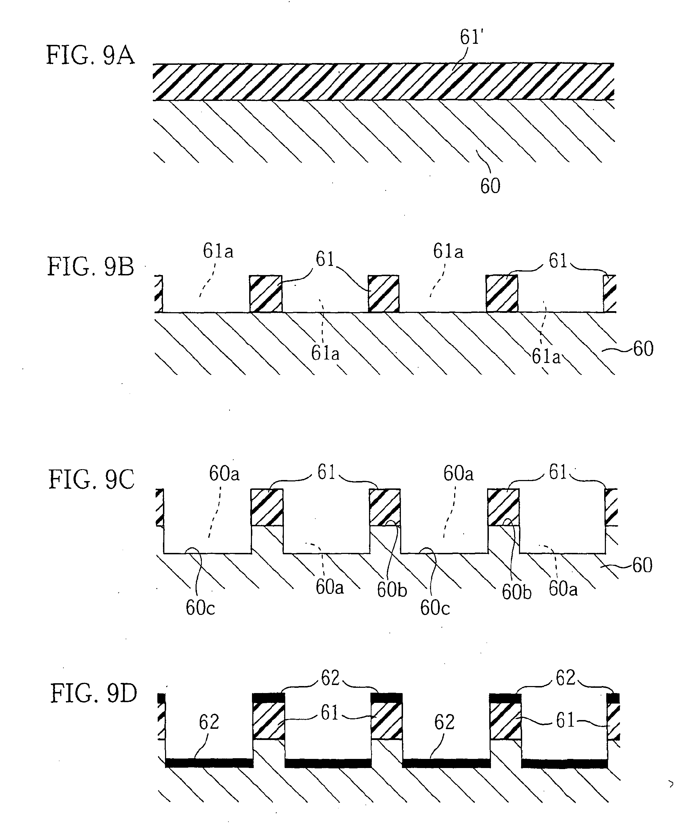

Figs. 9A to 11D show a method of manufacturing the magneto-optic recording medium X2. In this method, firstly a resist layer 61' is formed on a substrate 60, as shown in Fig. 9A. The substrate 60 may be a quartz substrate or a silicon wafer for producing a master disk.

Then exposure and development of the resist layer 61' is performed, thus to form a resist pattern 61 with an opening 61a as shown in Fig. 9B. The opening 61a has a pattern shape corresponding to the pregroove 20a to be formed on the substrate S2.

Proceeding to Fig. 9C, an etching process is performed on the substrate 60 with the resist pattern 61 serving as the mask, thus to form a recessed portion 60a on the substrate 60. At this stage, the substrate 60 obtains a land-groove shape including a land surface 60b and a groove surface 60c on the surface thereof. As for the etching process, for example a RIE process may be adopted.

The above is followed by formation of a mixed layer 62, as shown in Fig. 9D. The mixed layer 62 is formed in a thickness of 1 to 5 nm for example. The mixed layer 62 includes a first material as a mother material, which provides a relatively low etching rate in a subsequent etching process with a predetermined etching gas, and a second material of a relatively high etching rate in the same etching process, as an additive. The first and the second material may contain those materials cited above for the mixed layer 56. To form the mixed layer 62, a cosputtering process may be performed to deposit the first material and the second material on the substrate 60. By this cosputtering process, the first and the second material are deposited also on the resist pattern 61.

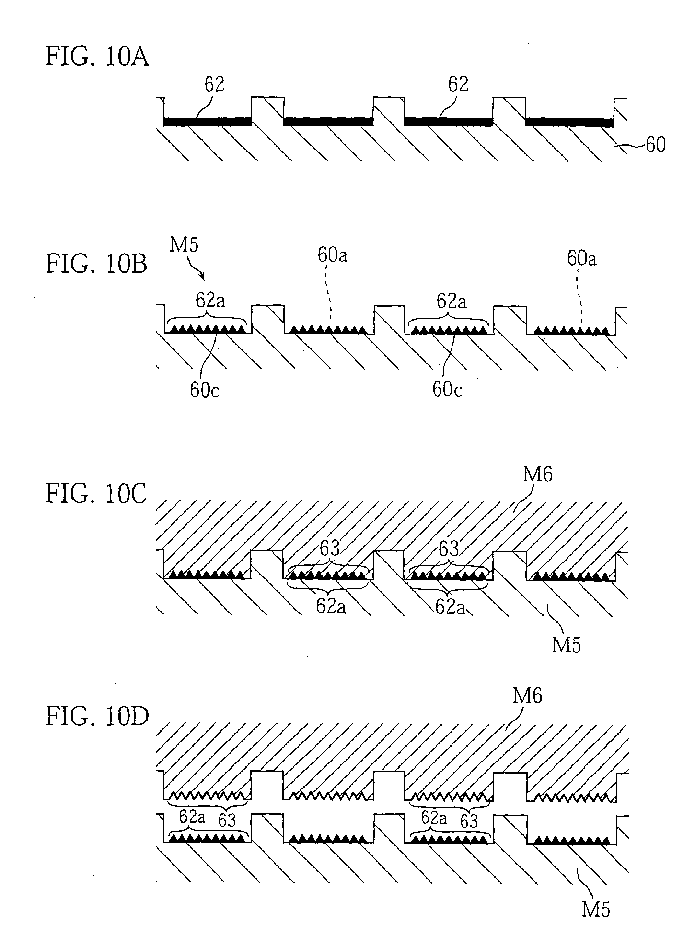

Referring to Fig. 10A, the resist pattern 61 is then removed from the substrate 60. In this process, the mixed layer 62 located on the resist pattern 61 is also removed.

Proceeding to Fig. 10B, a dry etching process is performed on the mixed layer 62 remaining on the groove surface 60c, to form a minute concave-convex shape 62a on the mixed layer 62. The minute concave-convex shape 62a has a roughness Ra of 0.3 to 1.5 nm and a concave-convex pitch of 1 to 20 nm. In this etching process, an etching gas having a higher etching rate with respect to the second material, than to the first material is employed. It is preferable that the etching rate with respect to the second material is ten times or more as fast as the etching rate with respect to the first material. Regarding the type of the etching gas, O₂ or CF₄ may be employed depending on the type of the first and the second material.

The foregoing steps lead to completion of a master plate M5 for fabricating the substrate S2 that includes the recessed portion 60a corresponding to the pregroove 20a of the substrate S2, as well as the minute concave-convex shape 62a on the groove surface60c. In such manufacturing method of the master plate, the substrate 60 does not have to be intentionally heated up to 200 degrees centigrade or higher, when forming the minute concave-convex shape 56a. Accordingly to the foregoing method, therefore, the master plate M5 can be properly manufactured even when the substrate 60 is constituted of a material prone to be deformed at 200 degree centigrade.

For manufacturing the magneto-optic recording medium X2, a stamper M6 is then formed by an electroforming process as shown in Fig. 10C, utilizing the master plate M5 as the template. Specific process is similar to the foregoing description given with reference to Fig. 5A on the formation of the stamper M2. To the stamper M6, the land-groove shape and the minute concave-convex shape 62a of the master plate M5 are transferred, so that the land-groove shape and a minute concave-convex shape 63 are formed on the land portion of the land-groove shape. After forming the stamper M6, the stamper M6 and the master plate M5 are separated, as shown in Fig. 10D.

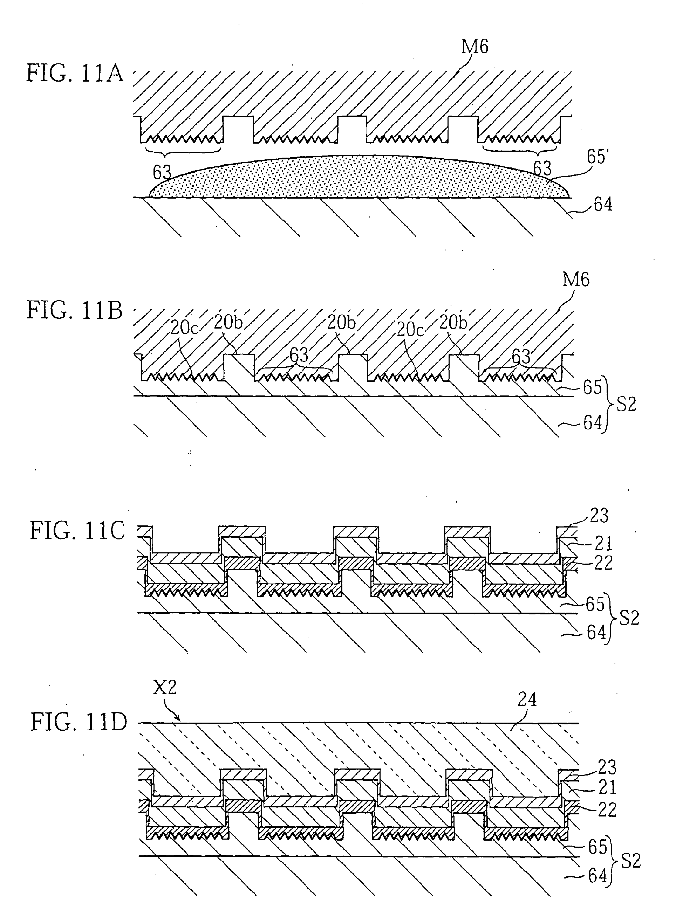

After performing a press process to form the stamper M6 into a disk shape of a predetermined outer diameter if necessary, the substrate S2 is fabricated utilizing the stamper M6, as shown in Figs. 11A and 11B.

Specifically, a base material 64 and the stamper M6 are adhered to each other via a UV-curable resin material 65'. To constitute the base material 64, those materials cited above for the base material 54 may be employed. The surface of the base material 64 may be subjected to a pretreatment, where necessary, to achieve excellent adhesion with the resin material 65'.

After the adhesion, the resin material 65' is irradiated with a UV-ray from the side of the base material 64 for hardening, thus to constitute a resin layer 65. As a result, the land-groove shape and the minute concave-convex shape 63 of the stamper M6 are transferred to the resin layer 65, to thereby form a land-groove shape including on the surface thereof the land surface 20b and the groove surface 20c with the minute concave-convex shape. Through such steps, the foregoing substrate S2 is obtained. For manufacturing the substrate S2, an injection molding process may be employed with the stamper M6 as the template, instead of the foregoing method.

For manufacturing the magneto-optic recording medium X2, after separating the substrate S2 and the stamper M6, the heat dissipation layer 22, the recording magnetic region 21, and the dielectric layer 23 are sequentially formed on the substrate S2, as shown in Fig. 11C. These layers may be formed by depositing predetermined materials by a sputtering process.

Then as shown in Fig. 11D, the protecting film 24 is formed on the dielectric layer 23. Specific process of forming the protecting film 24 is similar to the description given referring to Fig. 6B.

Throughout the foregoing steps, the magneto-optic recording medium X2 can be manufactured. When providing the multilayer structure from the resin layer 65 to the protecting film 24 on both sides of the base material 64, the series of steps described referring to Figs. 11A to 11D are performed again on the other side of the base material 64.

In the magneto-optic recording medium X2, the substrate S2 includes the groove surface 20c having the minute concave-convex shape. The groove surface 20c has a surface roughness Ra of 0.3 to 1.5 nm, and a concave-convex pitch of 1 to 20 nm. The minute concave-convex shape on the groove surface 20c is reflected on the recording layer-side surface of the heat dissipation layer 22, which is sufficiently thin, so that a minute concave-convex shape (not shown) having both a great surface roughness and a small concave-convex pitch is formed also on the surface of the groove portion 22b of the heat dissipation layer 22. The minute concave-convex shape on the surface of the heat dissipation layer 22 has a surface roughness Ra of 0.3 to 1.5 nm, and a concave-convex pitch of 1 to 20 nm, for example. The pinning force originating from such minute concave-convex shape of the heat dissipation layer 22 is applied to the magnetic wall in the recording layer included in the recording magnetic region 21, at the groove portion 21b of the recording magnetic region 21, so that a minute magnetic domain can be stably formed in the recording layer. The magneto-opticrecording medium X2 thus constructed has a high recording resolution, and is hence appropriate in achieving a higher recording density.

In addition, in the magneto-optic recording medium X2, the land surface 20b of the substrate S2 does not include the minute concave-convex shape as that formed on the groove surface 20c, and hence the surface of the land portion 22a of the heat dissipation layer 22 does not include a properly formed minute concave-convex shape. Accordingly, on the land portion 21a of the recording magnetic region 21, a pinning force as that applied to the groove portion 21b is not applied to the recording layer included in the recording magnetic region 21, and therefore a fine magnetic domain is less likely to be formed in the recording layer (which does not perform the recording function in this embodiment) in the land portion 21a, than in the recording layer in the groove portion 21b. Consequently, in the magneto-optic recording medium X2, the groove portions 21b are effectively isolated magnetically from one another by the land portions 21a, thereby facilitating the appropriate use of the groove portion 21b as the data track.

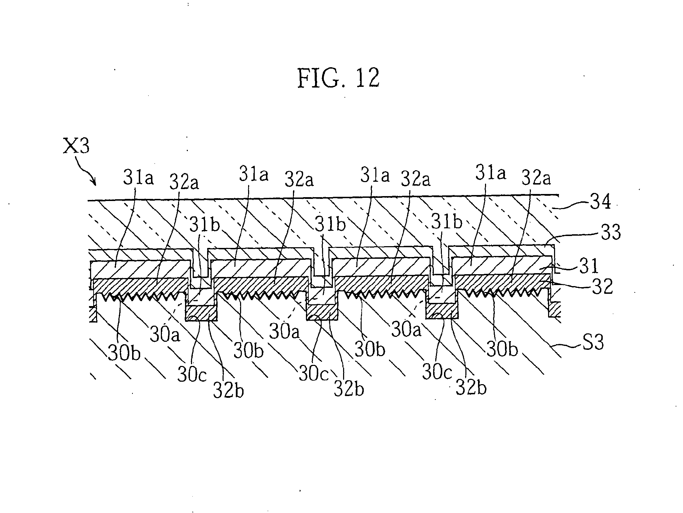

Fig. 12 is a cross-sectional view showing a part of a magneto-optic recording medium X3 according to a third embodiment of the present invention. The magneto-optic recording medium X3 includes a substrate S3, a recording magnetic region 31, a heat dissipation layer 32, a dielectric layer 33, and a protecting film 34, thus to be constituted as a front illumination type magneto-optic disk. Also, the magneto-optic recording medium X3 includes the multilayer structure shown in Fig. 12 on one or both sides of the substrate S3.

The substrate S3 includes a helical or concentric pregroove 30a thus presenting a land-groove shape, with a land surface 30b and a groove surface 30c. The land surface 30b and groove surface 30c are a minute concave-convex surface with a minute concave-convex shape, having a surface roughness Ra of 0.3 to 1.5 nm and a concave-convex pitch of 1 to 20 nm. To constitute the substrate S3, those materials cited above for the substrate S1 may be employed.

The recording magnetic region 31 has a magnetic structure that includes one or a plurality of magnetic films capable of performing two functions of thermomagnetic recording and reproduction based on a magneto-optic effect. For example, the recording magnetic region 31 may be constituted of a single recording layer having both of the recording function and the reproducing function. Alternatively, the recording magnetic region 31 may have a multilayer structure (including the recording layer) including a plurality of magnetic films similar to those included in the recording magnetic region 11. To constitute the recording magnetic region 31, those materials cited above for the recording magnetic region 11 may be employed. Also, the recording magnetic region 31 has a land-groove shape reflecting the land-groove shape of the substrate S3, and includes a land portion 31a and a groove portion 31b. The land portion 31a constitutes a data track in the recording medium of the present invention.

The heat dissipation layer 32 serves to efficiently transmit heat generated by laser irradiation in the recording magnetic region 31 to the substrate S3, and has a thickness of 10 to 40 nm. Also, the heat dissipation layer 32 has a land-groove shape reflecting the land-groove shape of the substrate S3, and includes a land portion 32a and a groove portion 32b. To constitute the heat dissipation layer 32, those materials cited above for the heat dissipation layer 11 may be employed.

The dielectric layer 33 and the protecting film 34 are similarly constituted to the dielectric layer 13 and the protecting film 14 described above.

Figs. 13A to 14B show a part of steps in a method of manufacturing the magneto-optic recording medium X3. In this method, a stamper M7 is firstly formed by an electroforming process as shown in Fig. 13A, utilizing the master plate M6 as the template. Specific process is similar to the foregoing description given with reference to Fig. 5A on the formation of the stamper M2. The stamper M7 serves as the mother stamper for fabricating the substrate S3. To the stamper M7, the land-groove shape and the minute concave-convex shape 63 of the stamper M6 are transferred, so that the land-groove shape and a minute concave-convex shape 66 are formed. After forming the stamper M7, the stamper M7 and the master plate M6 are separated, as shown in Fig. 13B.

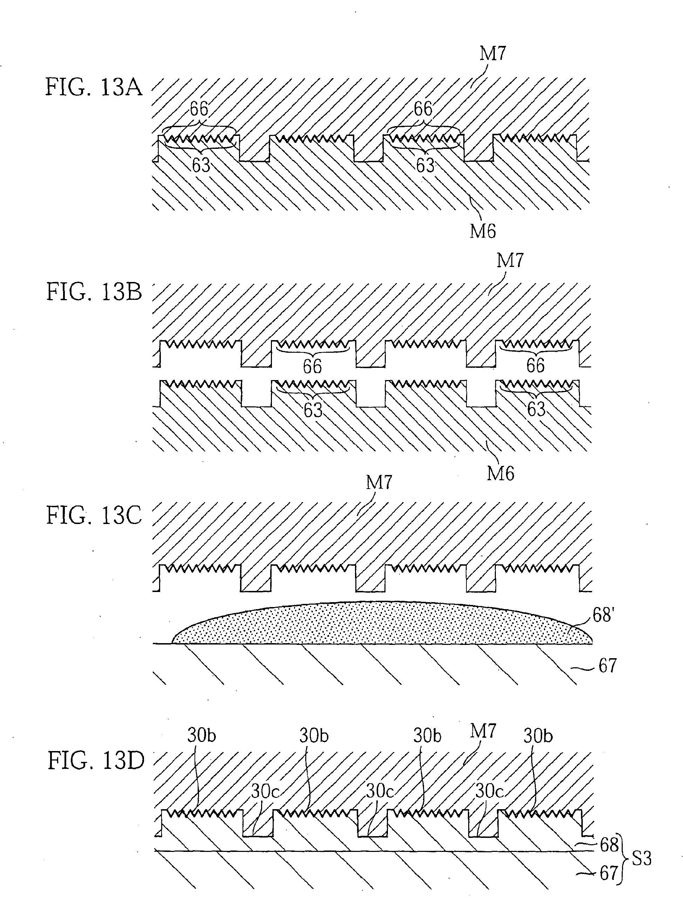

Then the substrate S3 is fabricated utilizing the stamper M7, as shown in Figs. 13C and 13D.

Specifically, a base material 67 and the stamper M7 are adhered to each other via a UV-curable resin material 68'. To constitute the base material 67, those materials cited above for the base material 54 may be employed. The surface of the base material 67 may be subjected to a pretreatment, where necessary, to achieve excellent adhesion with the resin material 68'.

After the adhesion, the resin material 68' is irradiated with a UV-ray from the side of the base material 67 for hardening, thus to constitute a resin layer 68. As a result, the land-groove shape and the minute concave-convex shape 66 of the stamper M7 are transferred to the resin layer 68, to thereby form a land-groove shape including on the surface thereof the land surface 30b with the minute concave-convex shape, and the groove surface 30c. Through such steps, the foregoing substrate S3 is obtained. For manufacturing the substrate S3, an injection molding process may be employed with the stamper M7 as the template, instead of the foregoing method.

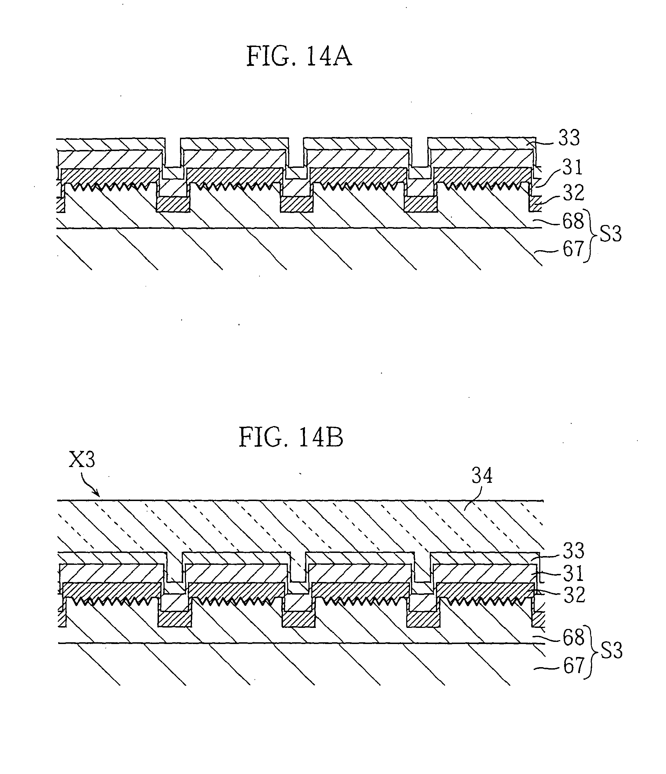

For manufacturing the magneto-optic recording medium X3, after separating the substrate S3 and the stamper M7, the heat dissipation layer 32, the recording magnetic region 31, and the dielectric layer 33 are sequentially formed on the substrate S3, as shown in Fig. 14A. These layers may be formed by depositing predetermined materials by a sputtering process.

Then as shown in Fig. 14B, the protecting film 34 is formed on the dielectric layer 33. Specific process of forming the protecting film 34 is similar to the description given referring to Fig. 6B.

Throughout the foregoing steps, the magneto-optic recording medium X3 can be manufactured. When providing the multilayer structure from the resin layer 68 to the protecting film 34 on both sides of the base material 67, the series of steps described referring to Figs. 13C to 14B are performed again on the other side of the base material 67:

In the magneto-optic recording medium X3, the substrate S3 includes the land surface 30b having the minute concave-convex shape. The land surface 30b has a surface roughness Ra of 0.3 to 1.5 nm, and a concave-convex pitch of 1 to 20 nm. The minute concave-convex shape on the land surface 30b is reflected on the recording layer-side surface of the heat dissipation layer 32, which is sufficiently thin, so that a minute concave-convex shape (not shown) having both a great surface roughness and a small concave-convex pitch is formed also on the surface of the land portion 32a of the heat dissipation layer 32. The minute concave-convex shape on the surface of the heat dissipation layer 32 has a surface roughness Ra of 0.3 to 1.5 nm, and a concave-convex pitch of 1 to 20 nm, for example. The pinning force originating from such minute concave-convex shape of the heat dissipation layer 32 is applied to the magnetic wall in the recording layer included in the recording magnetic region 31, at the land portion 31a of the recording magnetic region 31, so that a minute magnetic domain can be stably formed in the recording layer. The magneto-optic recording medium X3 thus constructed has a high recording resolution, and is hence appropriate in achieving a higher recording density.

In addition, in the magneto-optic recording medium X3, the groove surface 30c of the substrate S3 does not include the minute concave-convex shape as that formed on the land surface 30b, and hence the surface of the groove portion 32b of the heat dissipation layer 32 does not include a properly formed minute concave-convex shape. Accordingly, on the groove portion 31b of the recording magnetic region 31, a pinning force as that applied to the land portion 31a is not applied to the recording layer included in the recording magnetic region 31, and therefore a fine magnetic domain is less likely to be formed in the recording layer (which does not perform the recording function in this embodiment) in the groove portion 31b, than in the recording layer in the land portion 31a. Consequently, in the magneto-optic recording medium X3, the land portions 31a are effectively isolated magnetically from one another by the groove portions 31b, thereby facilitating the appropriate use of the land portion 31a as the data track.

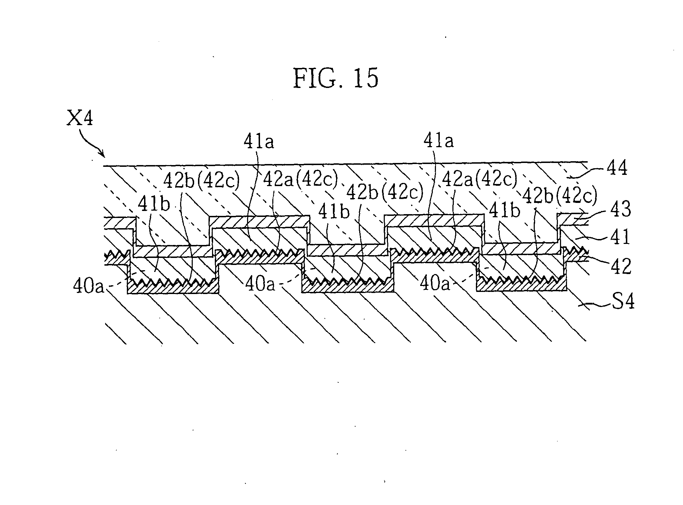

Fig. 15 is a cross-sectional view showing a part of a magneto-optic recording medium X4 according to a fourth embodiment of the present invention. The magneto-optic recording medium X4 includes a substrate S4, a recording magnetic region 41, a heat dissipation layer 42, a dielectric layer 43, and a protecting film 44, thus to be constituted as a front illumination type magneto-optic disk. Also, the magneto-optic recording medium X4 includes the multilayer structure shown in Fig. 15 on one or both sides of the substrate S4.

The substrate S4 includes a helical or concentric pregroove 40a, thus presenting a land-groove shape.

The recording magnetic region 41 has a magnetic structure that includes one or a plurality of magnetic films capable of performing two functions of thermomagnetic recording and reproduction based on a magneto-optic effect. For example, the recording magnetic region 41 may be constituted of a single recording layer having both of the recording function and the reproducing function. Alternatively, the recording magnetic region 41 may have a multilayer structure (including the recording layer) including a plurality of magnetic films similar to those included in the recording magnetic region 11. To constitute the recording magnetic region 41, those materials cited above for the recording magnetic region 11 may be employed. Also, the recording magnetic region 41 has a land-groove shape reflecting the land-groove shape of the substrate S4, and includes a land portion 41a and a groove portion 41b. The land portion 41a and the groove portion 41b constitute a data track in the recording medium of the present invention.

The heat dissipation layer 42 serves to efficiently transmit heat generated by laser irradiation in the recording magnetic region 41 to the substrate S4, and is constituted of a highly heat-conductive material such as Alsi, AlSiTi, or AgSi. The heat dissipation layer 42 has a land-groove shape reflecting the land-groove shape of the substrate S4, and the recording magnetic layer-side surface of the heat dissipation layer 42 includes a land surface 42a and a groove surface 42b. The land surface 42a and the groove surface 42c are minute concave-convex surface with the concave-convex shape, having a surface roughness Ra of 0.3 to 1.5 nm, and a concave-convex pitch of 1 to 20 nm.

The dielectric layer 43 and the protecting film 44 are similarly constituted to the dielectric layer 13 and the protecting film 14 described above.

Figs. 16A to 17C show a method of manufacturing the magneto-optic recording medium X4. In this method, firstly a resist layer 71' is formed on a substrate 40, as shown in Fig. 16A.

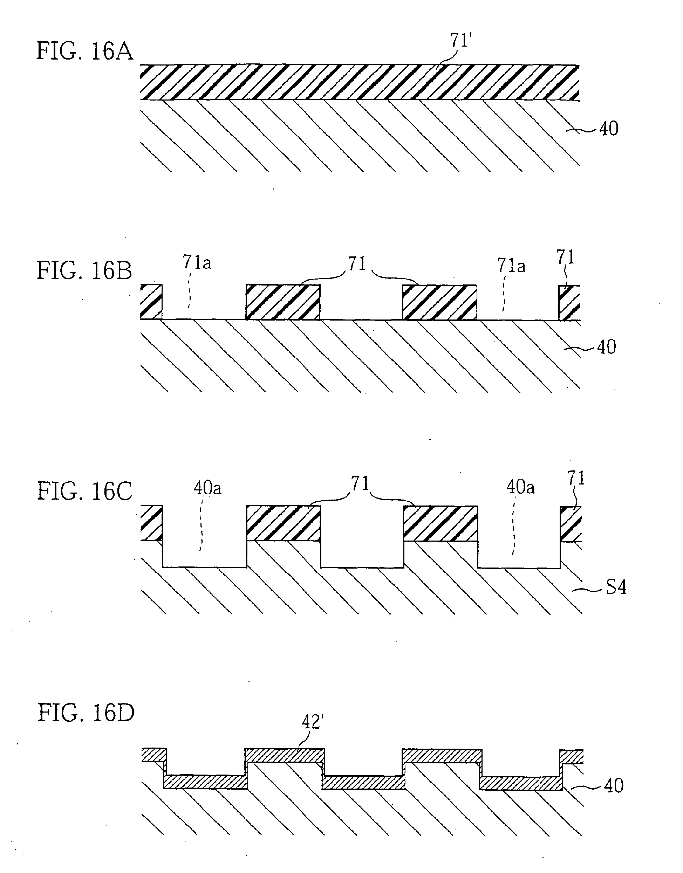

Then exposure and development of the resist layer 71' is performed, thus to form a resist pattern 71 with an opening 71a as shown in Fig. 16B. The opening 71a has a pattern shape corresponding to the pregroove 40a.

Proceeding to Fig. 16C, an etching process is performed on the substrate 40 with the resist pattern 71 serving as the mask, thus to form a pregroove 40a on the substrate 40. At this stage, the substrate S40 is obtained. As for the etching process, for example a RIE process may be adopted. After forming the pregroove 40a, the resist pattern 71 is removed from the substrate S4.

The above is followed by formation of a mixed layer 42' that serves as the base of a heat dissipation layer, as shown in Fig. 16D. The mixed layer 42' includes a first material as a mother material, which provides a relatively low etching rate in a subsequent etching process with a predetermined etching gas, and a second material of a relatively high etching rate in the same etching process, as an additive. The first material may contain an element selected out of the group consisting of Ag, Al, Pt, Ti, and Au. The second material may contain an element selected out of the group consisting of C, Si, and W. To form the mixed layer 42', a cosputtering process may be performed to deposit the first material and the second material on the substrate S4. Also, prior to forming the mixed layer 42', a predetermined underlying layer may be formed in advance on the substrate S4, for assuring sufficient adhesion of the mixed layer 42' and the substrate S4.

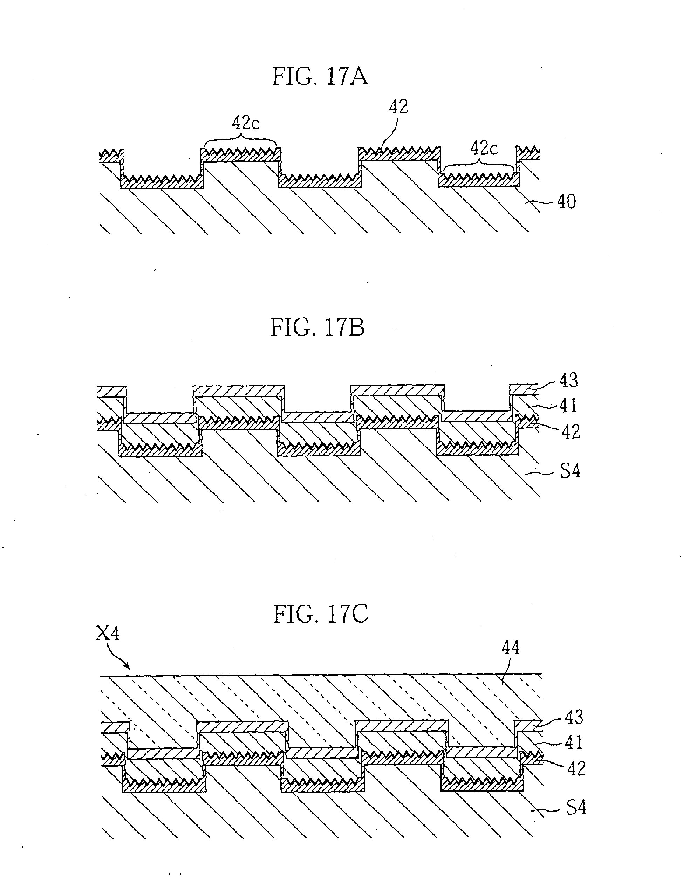

Proceeding to Fig. 17A, a dry etching process is performed on the mixed layer 42' to form a minute concave-convex shape 42c, thus forming a heat dissipation layer 42. In this etching process, an etching gas having a higher etching rate with respect to the second material, than to the first material is employed. It is preferable that the etching rate with respect to the second material is ten times or more as fast as the etching rate with respect to the first material. For example, when AlSi is employed as the first material and C is employed as the second material, O₂ may be suitably employed as the etching gas. Otherwise, when Al is employed as the first material and Si is employed as the second material, CF₄ may be suitably employed as the etching gas.

For manufacturing the magneto-optic recording medium X4, the recording magnetic region 41 and the dielectric layer 43 are sequentially formed on the heat dissipation layer 42, as shown in Fig. 17B. These layers may be formed by depositing predetermined materials by a sputtering process.

Throughout the foregoing steps, the magneto-optic recording medium X4 can be manufactured. When providing the multilayer structure from the heat dissipation layer 42 to the protecting film 24 on both sides of the substrate S4, the series of steps described referring to Figs. 16A to 17C are performed again on the other side of the substrate S4.

In the magneto-optic recording medium X4, the substrate S4 includes the land surface 42a and the groove surface 42b respectively having the minute concave-convex shape. Theland surface 42a and the groove surface 42bc have a surface roughness Ra of 0.3 to 1.5 nm, and a concave-convex pitch of 1 to 20 nm. The pinning force originating from such minute concave-convex shape of the heat dissipation layer 42 located right under the recording magnetic region 41 is applied to the magnetic wall in the recording layer included in the recording magnetic region 41, at the land portion 41a and the groove portion 41b of the recording magnetic region 41, so that a minute magnetic domain can be stably formed in the recording layer. The magneto-optic recording medium X4 thus constructed has a high recording resolution, and is hence appropriate in achieving a higher recording density.

### <Working example 1>

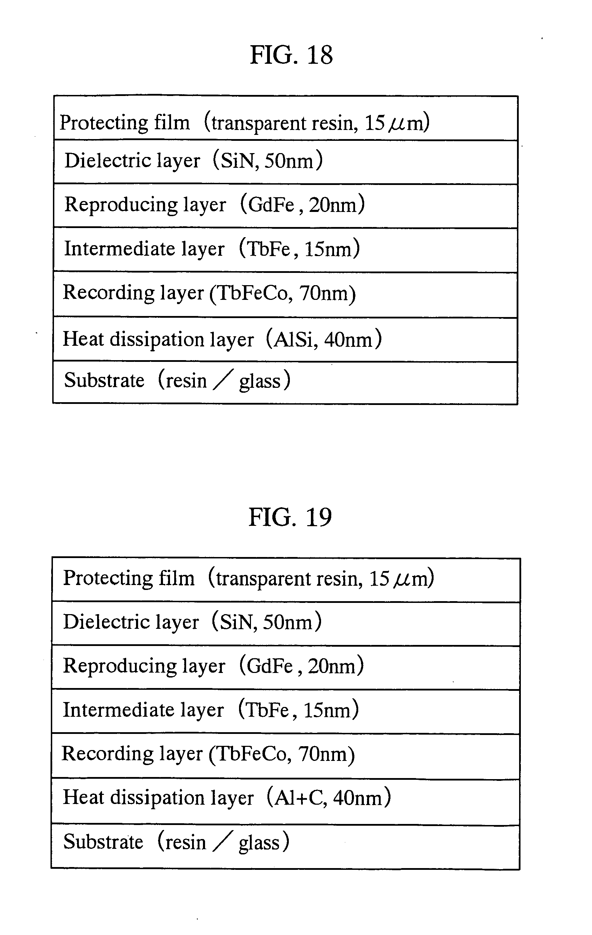

A magneto-optic recording medium representing the following working example was made, as a front illumination type magneto-optic disk with a multilayer structure shown in Fig. 18. In the making up of the magneto-optic recording medium representing this working example, first a master plate was fabricated. Then a mother stamper was made based on the master plate. Utilizing the mother stamper, a substrate for a magneto-optic recording medium was made. Finally the respective layers of the magneto-optic recording medium were sequentially formed on the substrate.

For making the master plate, firstly a positive photoresist (trade name: DVR-300, manufactured by Zeon Corporation) was applied by a spin coating process in a thickness of 100 nm, to a quartz substrate (diameter: 150 mm, thickness: 1.2 mm, surface roughness Ra: 0.25 nm). Then the photoresist layer was prebaked at 100 degrees centigrade for 30 minutes. After that, a predetermined pregroove pattern (helical shape, groove width: 0.275 µm, track pitch: 0.275 µm) was exposed using an optical disk exposure equipment (exposure laser: Ar laser of 351 nm in wavelength, objective lens: numerical aperture NA 0.90). The pregroove pattern represents the pregroove pattern shape to be formed on the magneto-optic recording medium substrate, which will be described later in this working example. Then the exposed photoresist layer was developed, thereby forming the resist pattern.

Thereafter, an RIE equipment was employed to perform an etching process on the quartz substrate with the resist pattern utilized as the mask, to form a pregroove of the predetermined pattern in a thickness of 50 nm, on the quartz substrate. In this etching process, CHF₃ was employed as the etching gas, at the gas pressure of 0.5 Pa, for an etching duration of 120 seconds. In this process, a land-groove surface with a land-groove shape (including a land surface and a groove surface) was obtained on the quartz substrate.

Then utilizing an ashing equipment to apply an oxygen plasma on the resist pattern, the resist pattern was removed by ashing. In this ashing process, O₂ was employed as the ashing gas, at the gas pressure of 1 Pa for an ashing duration of 120 seconds.

That was followed by a sputtering process to deposit ruthenium oxide (RuOx) on the land-groove surface of the quartz substrate, thus forming an underlying layer (thickness: 1 nm) for formation of minute concave-convex shape. Specifically, a reacting sputtering was performed utilizing a ruthenium target, and Ar gas and O₂ gas as the sputtering gas, to form the RuOx layer. In this sputtering, the flow rate ratio between the Ar gas and the O₂ gas was set at 5:1, the gas pressure was set at 1.6 Pa, and a power of 40 W was applied.

Then a minute concave-convex shape was formed on the underlying layer on the land surface and the groove surface of the quartz substrate. For forming the minute concave-convex shape, firstly the substrate was heated to 200 degree centigrade, and Ag was deposited in a thickness of 1 nm by a sputtering process. In this process, because of aggregation of the Ag provoked by a difference in surface tension between the underlying layer and the Ag, the Ag grew in a shape of an island at a plurality of locations, thus constituting Ag fine particle groups on the underlying layer. In this sputtering process, a Ag target was employed, the gas pressure was set at 1.6 Pa, and a power of 40 W was applied. Then C was grown by sputtering to a thickness of 1 nm while the substrate was heated to 200 degree centigrade, to increase the height of the fine particles. In this sputtering process, a C target was employed, the gas pressure was set at 0.3 Pa, and a power of 150 W was applied. The carbon (C) serves to fix the shape of the Ag fine particles. Through such steps, the minute concave-convex shape having a surface roughness Ra of 1 nm and a concave-convex pitch of 10 nm was obtained on the land surface and the groove surface of the quartz substrate.

Thus, the master plate having the minute concave-convex shape on the land surface and the groove surface of the land-groove shape thereof is obtained.

The next step was formation of the mother stamper by an electroforming process, with the master plate used as the template. Specifically, firstly Ni was deposited by a PVD (ion plating) process on the land-groove surface of the master plate, thus to form a nickel thin film in a thickness of 50 nm. Then a non-electrolytic plating was performed utilizing the nickel thin film as the conductor layer to grow the Ni, thus to form a nickel plate of a thickness of 300 µm. The nickel plate and the master plate were then separated. After that, the nickel plate was pressed, thus to form the mother stamper. To the mother stamper, the land-groove shape and the minute concave-convex shape of the master plate were transferred, so that the land-groove shape and the minute concave-convex shape were formed thereon.

Utilizing the mother stamper fabricated as above, the substrate for the magneto-optic recording medium was made. Specifically, firstly the mother stamper and a flat glass substrate were adhered to each other, via a UV-curable resin. Then a UV-ray was emitted from the side of the glass substrate, to harden the UV-curable resin. At this point, the magneto-optic recording medium substrate was obtained. To the substrate, the land-groove shape and the minute concave-convex shape of the mother stamper were transferred, so that the minute concave-convex shape (surface roughness Ra: 1 nm, concave-convex pitch: 10 nm) were formed on the land surface and the groove surface thereof.

Then AlSi was deposited by sputtering on the substrate made as above, to form a heat dissipation layer in a thickness of 40 nm. Specifically, a cosputtering process was performed utilizing an Al target and a Si target, for depositing the AlSi. In this sputtering process, the sputtering gas pressure was set at 0.59 Pa, and the applied power was set at 300 W for the Al target, and 200 W for the Si target.

Then a TbFeCo amorphous alloy (Tb₂₂Fe₇₀Co₈) was deposited on the heat dissipation layer, thus to form a recording layer in a thickness of 70 nm. In this sputtering process, a Tb target and a FeCo alloy target were employed, the sputtering gas pressure was set at 1.5 Pa, and the applied power was set at 46 W for the Tb target, and 200 W for the FeCo alloy target.

That was followed by deposition of a TbFe amorphous alloy (Tb₂₂Fe₇₈) on the recording layer, for forming an intermediate layer in a thickness of 15 nm. In this sputtering process, a Tb target and a Fe target were employed, the sputtering gas pressure was set at 2.5 Pa, and the applied power was set at 76 W for the Tb target, and 300 W for the Fe target.

On the intermediate layer, a GdFe amorphous alloy (Gd₂₆Fe₇₄) was deposited, to thus form a reproducing layer in thickness of 20 nm. In this sputtering process, a Gd target and a Fe target were employed, the sputtering gas pressure was set at 0.3 Pa, and the applied power was set at 84 W for the Gd target, and 250 W for the Fe target.

On the recording layer, a SiN was deposited, thus forming a dielectric layer in a thickness of 50 nm dielectric layer. Specifically, a reactive sputtering process was performed with a Si target, in which an Ar gas and a N₂ gas were employed as the sputtering gas, to deposit the SiN on the substrate. In this sputtering, the flow rate ratio between the Ar gas and the N₂ gas was set at 3:1, the sputtering gas pressure was set at 0.3 Pa, and a power of 500 W was applied.

Then a transparent protecting film was formed in a thickness of 15 µm, on the dielectric layer. Specifically, firstly a spin coating process was performed to deposit a UV-curable resin (Daicure Clear manufactured by Dainippon Ink & Chemicals, Incorporated) on the dielectric layer, in a thickness of 15 µm. Then the UV-curable resin was hardened by UV-ray irradiation, thus to form a protecting film on the dielectric layer.

Following thus the method according to Figs. 4A to 6B, the magneto-optic recording medium representing this working example was made.

### <Working examples 2 to 5>

Magneto-optic recording media representing the following working examples were made, as examples of a front illumination type magneto-optic disk with a multilayer structure shown in Fig. 18. The magneto-optic recording media were fabricated through the same steps as the working example 1, except for the formation conditions of the minute concave-convex shape in the fabrication of the master plate. Specifically, the concave-convex pitch of the land surface and the groove surface of the substrate was changed to 1 nm (working example 2), 5 nm (working example 3), 15 nm (working example 4), and 20 nm (working example 5) respectively, instead of 10 nm of the working example 1. In the fabrication process of the master plates, the Ag was deposited on the underlying layer in a thickness of 0.1 nm (working example 2), 0.5 nm (working example 3), 1.5 nm (working example 4) and 2 nm (working example 5) respectively, instead of 1 nm of the working example 1. Controlling the thickness of the Ag to be deposited enables adjusting the concave-convex pitch of the minute concave-convex shape.

### <Working example 6>

A magneto-optic recording medium representing the following working example was made, as a front illumination type magneto-optic disk with a multilayer structure shown in Fig. 18. For making up the magneto-optic recording medium representing this working example, firstly the similar steps to those of the working example 1 were performed, namely a photoresist layer was formed on a quartz substrate (diameter: 150 mm, thickness: 1.2 mm, surface roughness Ra: 0.25 nm); a resist pattern was formed; an etching process was performed; the resist pattern was removed; and a land-groove shape including a land surface and a groove surface was formed on the quartz substrate.

After that, a sputtering process was performed to deposit Al, Si and C on the land-groove surface of the quartz substrate, thus to form a mixed layer in a thickness of 3 nm. Specifically, a cosputtering process was performed utilizing an AlSi target and a C target, and Ar gas as the sputtering gas, to form the mixed layer that contains Al, Si and C. In this sputtering process, the gas pressure was set at 0.5 Pa, and the applied power was set at 600 W for the AlSi target, and 1000 W for the C target.

Then utilizing an RIE equipment to apply an oxygen plasma to the mixed layer, the minute concave-convex shape was formed on the surface of the mixed layer. In this etching process, O₂ was employed as the etching gas, at the gas pressure of 1 Pa for an etching duration of 120 seconds. Thus, the minute concave-convex shape having a surface roughness Ra of 1 nm and a concave-convex pitch of 10 nm was formed on the land surface and the groove surface of the quartz substrate.

Utilizing the master plate thus fabricated, the mother stamper was made through similar steps to those of the working example 1. Then the magneto-optic recording medium substrate was made utilizing the mother stamper through similar steps to those of the working example 1. The substrate has the land-groove shape and the minute concave-convex shape (surface roughness Ra: 1 nm, concave-convex pitch: 10 nm) that are substantially identical to the land-groove shape and the minute concave-convex shape formed on the master plate. After that, the respective layers were formed on the substrate, through similar steps to those of the working example 1.

Following thus the method according to Figs. 4A to 4C, 7A to 7D, and 6A to 6B, the magneto-optic recording medium representing this working example was made.

### <Working example 7>

A magneto-optic recording medium representing the following working example was made, as a front illumination type magneto-optic disk with a multilayer structure shown in Fig. 18. For making up the magneto-optic recording medium, firstly a positive photoresist (DVR-300 manufactured by Zeon Corporation) was applied by a spin coating process in a thickness of 100 nm, to a quartz substrate (diameter: 150 mm, thickness: 1.2 mm, surface roughness Ra: 0.25 nm). Then the photoresist layer was prebaked at 100 degree centigrade for 30 minutes. After that, a predetermined pregroove pattern (helical shape, groove width: 0.275 µm, track pitch: 0.275 µm) was exposed using an optical disk exposure equipment (exposure laser: Ar laser of 351 nm in wavelength, objective lens: numerical aperture NA 0.90). The pregroove pattern represents the pregroove pattern shape to be formed on the magneto-optic recording medium substrate, which will be described later in this working example. Then the exposed photoresist layer was developed, thereby forming the resist pattern.

Thereafter, an RIE equipment was employed to perform an etching process on the quartz substrate with the resist pattern utilized as the mask, to form the pregroove of the predetermined pattern in a thickness of 50 nm, on the quartz substrate. In this etching process, CHF₃ was employed as the etching gas, at the gas pressure of 0.5 Pa, for an etching duration of 120 seconds. In this process, a land-groove surface with a land-groove shape (including a land surface and a groove surface) was obtained on the quartz substrate.

After that, a sputtering process was performed to deposit Al, Si and C utilizing the resist pattern as the mask, thus to form a mixed layer in a thickness of 3 nm, on the groove surface of the quartz substrate. Specifically, a cosputtering process was performed utilizing an AlSi target and a C target, and Ar gas as the sputtering gas, to form the mixed layer that contains Al, Si and C. In this sputtering process, the gas pressure was set at 0.5 Pa, and the applied power was set at 600 W for the AlSi target, and 1000 W for the C target. In this process, the Al, Si, and C were deposited also on the resist pattern.

Then the substrate was dipped in a developing solution, to thereby remove the resist pattern. As a result, the mixed layer deposited on the resist pattern was also removed.

Utilizing an RIE equipment to apply an oxygen plasma to the mixed layer, the minute concave-convex shape was then formed on the surface of the mixed layer. In this etching process, O₂ was employed as the etching gas, at the gas pressure of 1 Pa for an etching duration of 120 seconds. Thus, the minute concave-convex shape having a surface roughness Ra of 1 nm and a concave-convex pitch of 10 nm was formed on the land surface and the groove surface of the quartz substrate.

Utilizing the master plate thus fabricated, the mother stamper was made through similar steps to those of the working example 1. Then the magneto-optic recording medium substrate was made utilizing the mother stamper through similar steps to those of the working example 1. The substrate has the land-groove shape substantially identical to that formed on the master plate, and the minute concave-convex shape (surface roughness Ra: 1 nm, concave-convex pitch: 10 nm) substantially identical to the minute concave-convex shape formed on the master plate. After that, the respective layers were formed on the substrate, through similar steps to those of the working example 1.

Following thus the method according to Figs. 9A to 11D, the magneto-optic recording medium representing this working example was made.

### <Working example 8>

A magneto-optic recording medium representing the following working example was made, as a front illumination type magneto-optic disk with a multilayer structure shown in Fig. 19. For making up the magneto-optic recording medium representing this working example, firstly a sputtering process was performed to deposit SiN on a polycarbonate substrate with a land-groove shape on the surface thereof (diameter: 120 mm, thickness: 1.2 mm, track pitch: 0.275 µm, groove depth: 50 nm), thus to form an underlying layer (not shown in Fig. 19) in a thickness of 2 nm. Specifically, a reactive sputtering process was performed with a Si target, in which an Ar gas and a N₂ gas were employed as the sputtering gas, to deposit the SiN on the substrate. In this sputtering, the flow rate ratio between the Ar gas and the N₂ gas was set at 3:1, the sputtering gas pressure was set at 0.3 Pa, and a power of 500 W was applied.

After that, a sputtering process was performed to deposit Al, Si and C on the land-groove surface of the polycarbonate substrate, thus to form a mixed layer in a thickness of 40 nm. Specifically, a cosputtering process was performed utilizing an AlSi target and a C target, and Ar gas as the sputtering gas, to form the mixed layer that contains Al, Si and C. In this sputtering process, the gas pressure was set at 0.5 Pa, and the applied power was set at 600 W for the AlSi target, and 1000 W for the C target.

Utilizing an RIE equipment to apply an oxygen plasma to the mixed layer, the minute concave-convex shape was then formed on the surface of the mixed layer. In this etching process, O₂ was employed as the etching gas, at the gas pressure of 1 Pa for an etching duration of 120 seconds. This led to formation of a heat dissipation layer having the minute concave-convex shape (surface roughness Ra: 1 nm, concave-convex pitch: 10 nm) on the surface of the land portion and the groove portion.

Then a recording layer, an intermediate layer, a reproducing layer, a dielectric layer, and a protecting film were formed on the heat dissipation layer of this working example, through similar steps to those for forming the recording layer, the intermediate layer, the reproducing layer, the dielectric layer, and the protecting film in the working example 1.

Following thus the method according to Figs. 16A to 17C, the magneto-optic recording medium representing this working example was made.

### <Comparative example 1>

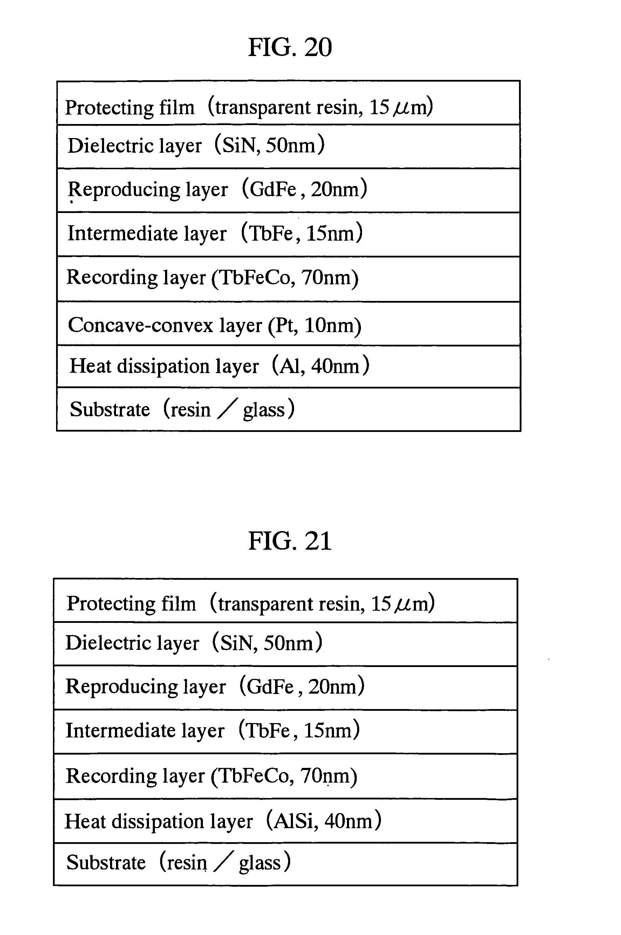

A magneto-optic recording medium representing the following comparative example was made, as a front illumination type magneto-optic disk with a multilayer structure shown in Fig. 20. For making up the magneto-optic recording medium representing this comparative example, firstly a sputtering process was performed to deposit Al on a polycarbonate substrate with a land-groove shape on the surface thereof (diameter: 120 mm, thickness: 1.2 mm, track pitch: 0.275 µm, groove depth: 50 nm), thus to form a heat dissipation layer in a thickness of 40 nm. In this sputtering, an Al target was employed, and Ar gas was employed as the sputtering gas. The gas pressure was set at 0.5 Pa, and the applied power was set at 500 W.

After that, a sputtering process was performed to deposit Pt on the heat dissipation layer, to thereby form a concave-convex layer (thickness: 10 nm) having a surface roughness Ra of 3 nm and a concave-convex pitch of 40 nm. In this sputtering, a Pt target was employed, and Ar gas was employed as the sputtering gas. The gas pressure was set at 1.6 Pa, and the applied power was set at 40 W.

Then a recording layer, an intermediate layer, a reproducing layer, a dielectric layer, and a protecting film were formed on the heat dissipation layer of this comparative example, through similar steps to those for forming the recording layer, the intermediate layer, the reproducing layer, the dielectric layer, and the protecting film in the working example 1.

That is how the magneto-optic recording medium representing this comparative example was made.

### <Comparative examples 2, 3>

Magneto-optic recording media representing the comparative example 2 and the comparative example 3 were made through similar steps to those of the comparative example 1, except that the concave-convex pitch of the concave-convex layer was changed to 35 nm for the comparative example 2 and 30 nm for the comparative example 3 respectively, instead of 40 nm. In the fabrication process of these comparative examples, the thickness of the concave-convex layer was changed to 8 nm for the comparative example 2 and 6 nm for the comparative example 3 respectively, instead of 10 nm for the comparative example 1.

### <Comparative example 4>

A magneto-optic recording media representing this comparative example was made through similar steps to those of the comparative example 1, except that an AlSi heat dissipation layer was formed instead of the Al heat dissipation layer. For forming the AlSi heat dissipation layer, the AlSi was deposited on a Si underlying layer (thickness: 2 nm). Specifically, a cosputtering process was performed utilizing an Al target and a Si target, to deposit the AlSi on the substrate. In this sputtering, the sputtering gas pressure was set at 0. 6 Pa, and the applied power was set at 500 W for the Al target, and 40 W for the Si target. The concave-convex pitch of the heat dissipation layer thus formed was 0.5 nm, at the surface on the growth terminal side.

### <Evaluation of characteristics>

With respect to the respective magneto-optic recording medium representing the working examples 1 to 5 and the comparative examples 1 to 4, dependence of bit error rate (bER) of a reproducing signal, on the concave-convex pitch of the minute concave-convex shape was reviewed. The concave-convex pitch herein means the concave-convex pitch of the pattern formed on the master plate and reflected on the heat dissipation layer with respect to the working examples 1 to 5, concave-convex pitch of the concave-convex layer surface with respect to the comparative example 1 to 3, and the concave-convex pitch on the heat dissipation layer surface, with respect to the comparative example 4.

In the measurement of the bit error rate, firstly recording marks of 75 nm in length were repeatedly recorded with a spacing of 75 nm, on the data track of each magneto-optic recording medium (magneto-optic disk). The recording process as performed based on a magnetic field modulation system with a predetermined optical disk evaluation equipment. The objective lens of the evaluation equipment has a numerical aperture NA of 0.85, and a laser wavelength of 405 nm. In this recording process, the laser scanning speed was set at 4 m/s and the laser power was set at 10 mW, and predetermined applied magnetic field (recording magnetic-field) was modulated while the laser was continuously emitted to each data track.

Then each magneto-optic recording medium was reproduced for comparison of the modulation signal at the recording and the demodulation signal at the reproduction, so that the error rate of the reproduction demodulation signal with respect to the recording modulating signal was calculated as the bit error rate (bER). The reproduction process was performed on the identical evaluation equipment, under a laser power of 1.5 mW and at a laser scanning speed of 4 m/s.

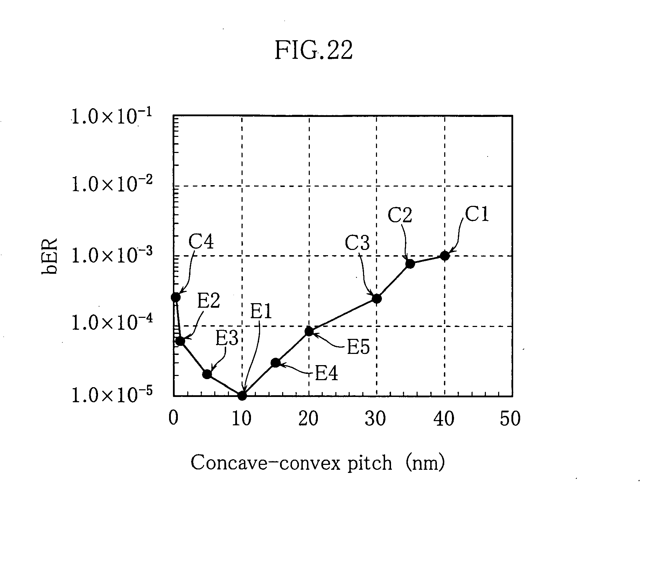

Such recording process and the subsequent reproducing process were performed with respect to the respective magneto-optic recording medium, and the bER was measured. Fig. 22 shows the results obtained through such series of measurement, with respect to the working examples 1 to 5 and the comparative examples 1 to 4. In the graph of Fig. 22, the horizontal axis represents the concave-convex pitch (nm), and the vertical axis represents the bER. Also, in the graph of Fig. 22, the measurement result from the working examples 1 to 5 and the comparative examples 1 to 4 are plotted as the dots with indicated as E1 to E5 and C1 to C4.

Whereas the bER is required to be 1x10⁻⁴ or lower for the magneto-optic recording medium to be accepted for practical use, it is understood in view of the graph of Fig. 22 that the bER of 1x10⁻⁴ or lower can be secured when the concave-convex pitch is within a range of 1 to 20 nm.

### <Concave-convex pitch dependence of surface roughness>

Samples P1 to P12 were made in order to review the concave-convex pitch dependence of the surface roughness Ra in the material film. The samples P1 to P12 are constituted of a predetermined substrate on which a material film with a minute concave-convex shape is provided, through similar steps to the deposition of Ag on the ruthenium oxide underlying layer, in the master plate fabrication process according to the working example 1.

For making up each sample, firstly a sputtering process was performed to deposit the ruthenium oxide (RuOx) on a quartz substrate surface by a similar method to the formation of the underlying layer according to the working example 1, thus to form an underlying layer (thickness: 1 nm) on which the minute concave-convex shape is to be provided. Then a predetermined material was deposited on the underlying layer to a predetermined thickness by sputtering, while the substrate was heated to 200 degree centigrade. During such process, the material was deposited or grew in an island shape at a plurality of locations, owing to the aggregation of the material provoked by a difference in surface tension between the underlying layer and the material. In this way, each of the samples P1 to P12 with the material film having a minute concave-convex shape on the surface thereof was made. The material and the thickness thereof deposited on the underlying layer of each sample were as follows. The sample P1: Al/0.1 nm, sample P2: Al/0.5 nm, sample P3: Al/1 nm, sample P4: Al/2 nm, sample P5: Ag/0.1 nm, sample P6: Ag/0.5 nm, sample P7: Ag/1 nm, sample P8: Ag/2 nm, sample P9: Pt/0.1 nm, sample P10: Pt/0.5 nm, sample P11: Pt/1 nm, and sample P12: Pt/2 nm.

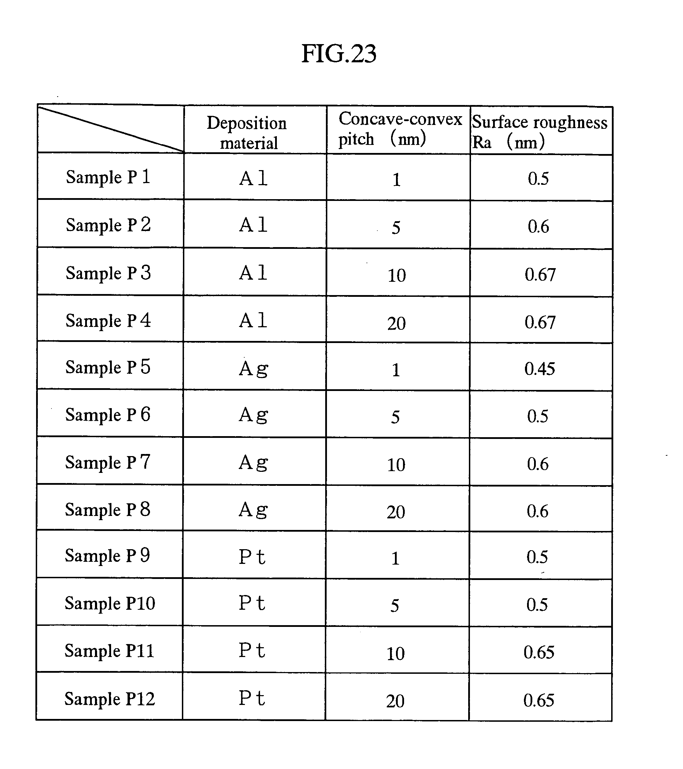

The concave-convex pitch and the surface roughness Ra were reviewed with respect to each of these samples. The results are shown in the table of Fig. 23.

The concave-convex pitch on the material film surface of the samples P1 to P12 is controlled to be within a range of 1 to 20 nm, by controlling the thickness of the material films. In the samples P1 to P12, on which the concave-convex pitch is controlled to be within such range, the surface roughness Ra remained within a range of 0.3 to 1.5 nm, as shown by the table of Fig. 23. Thus, the minute concave-convex surface having both of the surface roughness Ra of 0.3 to 1.5 nm and the concave-convex pitch of 1 to 20 nm could be obtained.

## Claims

1. A magneto-optic recording medium having a multilayer structure comprising:
a substrate;
a recording layer having perpendicular magnetic anisotropy so as to perform a recording function; and
a functional layer provided between the substrate and the recording layer;
wherein at least one of the substrate and the functional layer includes a surface facing the recording layer, the surface including a minute concave-convex surface with a roughness of 0.3 to 1.5 nm and a concave-convex pitch of 1 to 20 nm.

2. The magneto-optic recording medium according to claim 1, wherein the multilayer structure has a land-groove configuration including a land portion and a groove portion, and wherein the surface facing the recording layer includes the minute concave-convex surface either only at the land portion or only at the groove portion.

3. The magneto-optic recording medium according to claim 1,
wherein the recording layer is constituted of a magnetic material having a composition which causes a transition metal magnetization to be dominant, and the functional layer is constituted of a magnetic material having a composition which causes a rare earth metal magnetization to be dominant and includes an auxiliary recording layer in contact with the recording layer.

4. The magneto-optic recording medium according to claim 1,
wherein the recording layer is constituted of a magnetic material having a composition which causes a rare earth metal magnetization to be dominant, and the functional layer is constituted of a magnetic material having a composition which causes a transition metal magnetization to be dominant and includes an auxiliary recording layer in contact with the recording layer.

5. The magneto-optic recording medium according to claim 1,
further comprising a reproducing layer having perpendicular magnetic anisotropy for performing a reproducing function; and an intermediate layer interposed between the recording layer and the reproducing layer for varying the exchange coupling condition of the recording layer and the reproducing layer.

6. A magneto-optic recording medium having a multilayer structure comprising:
a substrate;
a recording layer having perpendicular magnetic anisotropy so as to perform a recording function; and
a heat dissipation layer located between the substrate and the recording layer,
wherein the heat dissipation layer includes a surface facing the recording layer, the surface including a minute concave-convex surface with a roughness of 0.3 to 1.5 nm and a concave-convex pitch of 1 to 20 nm.

7. The magneto-optic recording medium according to claim 6,
wherein the multilayer structure has a land-groove shape including a land portion and a groove portion, and the surface of the dissipation layer includes the minute concave-convex surface at only one of either the land portion or the groove portion, the surface facing the recording layer.

8. A substrate to be included in a magneto-optic recording medium, the substrate including a surface constituted of a resin material, the surface including a land surface and a groove surface and forming a land-groove shape,
wherein the land surface and/or the groove surface has a roughness of 0.3 to 1.5 nm and a concave-convex pitch of 1 to 20 nm.

9. A mother stamper for fabricating a substrate to be included in a magneto-optic recording medium, the stamper having a surface which includes a land surface and a groove surface and forms a land-groove shape,
wherein the land surface and/or the groove surface has a roughness of 0.3 to 1.5 nm and a concave-convex pitch of 1 to 20 nm.

10. A method of manufacturing a magneto-optic recording medium, the method comprising the steps of:
forming a material film on a base material, the material film including a first material having a relatively low etching rate and a second material having a relatively high etching rate;
removing at least a part of the second material in the material film by an etching process, thereby forming a minute concave-convex surface on the material film; and
forming on the material film a recording layer having perpendicular magnetic anisotropy so as to perform a recording function.

11. The method according to claim 10, wherein the first material includes an element selected out of the group consisting of Ag, Al, Pt, Ti, and Au, and the second material includes an element selected out of the group consisting of C, Si, and W.

12. A method of manufacturing a mother stamper for fabricating a substrate to be included in a magneto-optic recording medium, the method comprising the steps of:
depositing, on a surface of the substrate having a first land-groove shape with a land surface and a groove surface on the surface thereof, a material having a greater surface energy than the surface of the substrate, while heating the material to a temperature higher than the diffusion temperature thereof, thus forming a first minute concave-convex shape;
growing a metal material on the surface of the substrate by an electroforming process, thereby forming a stamper having a second land-groove shape corresponding to the first land-groove and a second minute concave-convex shape corresponding to the first minute concave-convex shape; and
separating the stamper and the substrate.

13. A method of manufacturing a mother stamper for fabricating a magneto-optic recording medium substrate, the method comprising the steps of:
forming a material film including a first material having a relatively low etching rate and a second material having a relatively high etching rate, on a surface of the substrate having a first land-groove with a land surface and a groove surface provided on the surface thereof;
removing at least a part of the second material in the material film by an etching process, thereby forming a first minute concave-convex surface on the surface of the material film;
growing a metal material on the material film by an electroforming process, thereby forming a stamper having a second land-groove shape corresponding to the first land-groove and a second minute concave-convex shape corresponding to the first minute concave-convex shape; and
separating the stamper and the substrate.

14. The method according to claim 13,
wherein the step of forming the material film includes employing an element selected out of the group consisting of Ag, Al, Pt, Ti, and Au as the first material, and an element selected out of the group consisting of C, Si, and W as the second material.

15. A method of manufacturing a mother stamper for fabricating a substrate to be included in a magneto-optic recording medium, the method comprising the steps of:
forming a resist pattern with an opening on a substrate;
performing an etching process through the resist pattern, thereby forming on the substrate a first land-groove shape including a land surface and a groove surface;
depositing a material from the side of the resist pattern, thereby forming a material film including a first material having a relatively low etching rate and a second material having a relatively high etching rate, on the groove surface;
removing at least a part of the second material in the material film by an etching process, thereby forming a first minute concave-convex surface on the groove surface;
removing the resist pattern from the substrate;
growing a metal material on the surface of the substrate including the land surface and the groove surface by an electroforming process, thereby forming a stamper having a second land-groove shape corresponding to the first land-groove and a second minute concave-convex shape corresponding to the first minute concave-convex shape; and
separating the stamper and the substrate.

16. The method according to claim 15, further comprising the steps of:
growing a metal material by an electroforming process on a surface of the stamper on the side of the second land-groove shape, thereby forming a child stamper having a third land-groove shape corresponding to the second land-groove shape, and a third minute concave-convex shape corresponding to the second minute concave-convex shape; and
separating the child stamper and the stamper.

17. The method according to claim 15,
wherein the step of depositing the material thereby forming a material film includes employing an element selected out of the group consisting of Ag, Al, Pt, Ti, and Au as the first material, and an element selected out of the group consisting of C, Si, and W as the second material.
